# EUROPÄISCHE PATENTSCHRIFT

(11) **EP 3 767 957 B1**
(45) Veröffentlichungstag und Bekanntmachung des Hinweises auf die Patenterteilung: **02.12.2026**
(21) Anmeldenummer: 19186757.1
(22) Anmeldetag: 17.07.2019
(51) Int. Cl.: H04N 21/234, H04N 21/44, H04N 21/472, H04N 21/8547, H04N 21/2343, H04N 21/2387, H04N 21/4402

(54) **VERFAHREN ZUR ÜBERTRAGUNG VON VIDEOINFORMATION AN EIN TELEKOMMUNIKATIONSGERÄT, WOBEI DIE VIDEOINFORMATION EINE MEHRZAHL AN VIDEOINFORMATIONSSTRÖMEN UMFASST, SYSTEM, TELEKOMMUNIKATIONSGERÄT, INHALTEBEZOGENE HINTERGRUND-SERVEREINRICHTUNG, COMPUTERPROGRAMM UND COMPUTERLESBARES MEDIUM**
METHOD FOR TRANSMITTING VIDEO INFORMATION TO A TELECOMMUNICATION DEVICE WHEREIN THE VIDEO INFORMATION COMPRISES A PLURALITY OF VIDEO INFORMATION STREAMS, SYSTEM, TELECOMMUNICATION DEVICE, CONTENT-RELATED BACKGROUND SERVER DEVICE, COMPUTER PROGRAM, AND COMPUTER-READABLE MEDIUM
PROCÉDÉ DE TRANSMISSION DES INFORMATIONS VIDÉO À UN APPAREIL DE TÉLÉCOMMUNICATION, LES INFORMATIONS VIDÉO COMPORTANT UNE PLURALITÉ DE FLUX D'INFORMATIONS VIDÉO, SYSTÈME, APPAREIL DE TÉLÉCOMMUNICATION, DISPOSITIF SERVEUR D'ARRIÈRE-PLAN RELATIF AU CONTENU, PROGRAMME INFORMATIQUE ET SUPPORT LISIBLE PAR ORDINATEUR

(43) Veröffentlichungstag der Anmeldung: 20.01.2021
(73) Patentinhaber: Deutsche Telekom AG, 53113 Bonn (DE)
(72) Erfinder: VOIGES, Jens, 53117 Bonn (DE); SPANN, Oliver, 51210 Wien (AT)
(74) Vertreter: Schwöbel, Thilo K.

(56) Entgegenhaltungen:
- US-A1- 2011 022 471
- US-A1- 2015 128 174
- US-A1- 2017 064 400

## Beschreibung

### Stand der Technik

Die Erfindung betrifft ein Verfahren zur Übertragung von Videoinformation an ein Telekommunikationsgerät mittels eines Telekommunikationsnetzes gemäß Anspruch 1.

Die Erfindung betrifft des Weiteren ein System zur Übertragung von Videoinformation an ein Telekommunikationsgerät mittels eines Telekommunikationsnetzes gemäß Anspruch 8.

Die Erfindung betrifft ferner ein Telekommunikationsgerät zum Empfang von Videoinformation mittels eines Telekommunikationsnetzes gemäß Anspruch 9.

Ferner betrifft die Erfindung eine inhaltebezogene Hintergrund-Servereinrichtung zur Übertragung von Videoinformation an ein Telekommunikationsgerät mittels eines Telekommunikationsnetzes gemäß Anspruch 10.

Des Weiteren betrifft die Erfindung ein Computerprogramm umfassend Befehle, mit deren Hilfe die Schritte eines erfindungsgemäßen Verfahrens durchführbar sind, und ein computerlesbares Medium, vorgesehen zur Speicherung eines Computerprogramms, oder ein Datenträgersignal, vorgesehen zur Übertragung eines Computerprogramms, wobei das computerlesbare Medium oder das Datenträgersignal das erfindungsgemäße Computerprogramm speichert oder überträgt.

In traditionellen Videoübertragungssystemen (insbesondere Fernsehübertragungssystemen) werden komplexe Liveereignisse (wie beispielsweise ein Fußballspiel, ein Autorennen, eine Pferdesportveranstaltung, oder auch eine sonstige komplexe Liveveranstaltung wie etwa ein politisches Ereignis wie etwa eine Parlamentssitzung, ein politisches Gipfelereignis, eine Showveranstaltung oder dergleichen) häufig von einer Mehrzahl an Kameras aufgenommen, so dass eine Mehrzahl an Videoinformationsströmen generiert werden bzw. es werden eine Mehrzahl von gleichzeitig stattfindenden (thematisch häufig zusammenhängenden) separaten Ereignissen (etwa mehrere (zeitlich) parallel stattfindende Fußballspiele oder auch Sportereignisse sonstiger Art wie etwa Basketballspiele oder dergleichen) natürlicherweise ebenfalls von mehreren Kameras erfasst, so dass hierdurch ebenfalls eine Mehrzahl an Videoinformationsströmen generiert werden.

Hierdurch ergibt sich die Situation, dass in Anbetracht einer solchen Mehrzahl von (zeitlich parallelen bzw. gleichzeitigen) Videoinformationsströmen (ggf. umfassend - zumindest zeitweise - wenigstens deutlich mehr als zwei Videoinformationsströme, beispielsweise fünf verschiedene Videoinformationsströme oder auch deutlich mehr als fünf, beispielsweise 7, 8, 10 oder 15 Videoinformationsströme) eine betrachtende Person in der Regel lediglich auf einen Videoinformationsstrom (oder höchsten eine geringe Anzahl von vielleicht zwei, drei oder vier solcher Videoinformationsströme) ihre Aufmerksamkeit (zumindest über eine längere Zeit) zu lenken in der Lage ist (oder dies gewünscht ist). Zudem liegt in einer solchen Situation häufig die Situation vor, dass bestimmte - in der Regel zeitlich vergleichsweise begrenzte - Ereignisse (beispielsweise gefallene Tore bei Fußballspielen, Zweikampfszenen oder dergleichen, oder auch (etwa bei politischen Ereignissen oder Showveranstaltungen) bestimmte Zitatstellen einzelner Akteure) im Vordergrund des Interesses stehen, so dass zu unterschiedlichen Zeitpunkten der Betrachtung (bzw. des Konsums) der Inhalte der verschiedenen Videoinformationsströme die Anzeige des jeweils (etwa aufgrund eines in diesem Videoinformationsstrom stattfindenden Ereignisses) gerade interessierenden Videoinformationsstroms sinnvoll bzw. wünschenswert ist.

Ausgehend hiervon ist es - beispielsweise für den Fall von mehreren gleichzeitig stattfindenden Fußballspielen - bekannt, in Echtzeit oder aber zumindest näherungsweise in Echtzeit (d.h. mit einem Zeitverzug gegenüber dem tatsächlichen (mittels eines objektiven Zeitmaßstabs bestimmten) Ereigniszeitpunkt, der vergleichsweise klein ist und in der Regel wenige Sekunden oder wenige 10 Sekunden oder maximal wenige Minuten beträgt) redaktionell bearbeitete bzw. kuratierte Zusammenstellungen verschiedener Ausschnitte (von typischerweise interessanten bzw. einen größeren Anteil von Zuschauern interessierenden Teilszenen) einer solchen Mehrzahl von Videoinformationsströmen zur Ansicht zur Verfügung zu stellen.

Nachteilig hierbei ist jedoch, dass eine solche redaktionell bearbeitete bzw. kuratierte Zusammenstellungen verschiedener Ausschnitte bzw. Abschnitte einer solchen Mehrzahl von Videoinformationsströmen vergleichsweise unflexibel ist (weil - zwar "live" bzw. zumindest näherungsweise in Echtzeit, jedoch letztlich doch statisch bzw. zentral bzw. nicht veränderbar - eine Auswahl von "interessanten" Ereignissen oder Szenen vorgenommen wurde, die aus Zuschauersicht nicht änderbar oder variierbar oder auf die jeweiligen individuellen Zuschauerbedürfnisse anpassbar ist. US 2011/022471 A1 offenbart Messaging-Dienste zur Bereitstellung von Aktualisierungen für Multimedia-Inhalte, die im Rahmen einer Live-Veranstaltung über das Internet übertragen werden. In einer Ausführungsform stellt ein Messaging-Server Echtzeit-Aktualisierungen für Multimedia-Inhalte einer Live-Veranstaltung bereit, die über das Internet an mehrere Mediaplayer übertragen werden, welche die Multimedia-Inhalte über das Internet anfordern. In einer Ausführungsform zeigen die Echtzeit-Aktualisierungen an, wann die Multimedia-Inhalte zur Übertragung über das Internet verfügbar sind. In einer anderen Ausführungsform können die Echtzeit-Aktualisierungen verwendet werden, um dynamisch Werbemarkierungen für Werbeunterbrechungen in die Multimedia-Inhalte einzufügen.

### Offenbarung der Erfindung

Der Erfindung liegt die Aufgabe zugrunde, ein optimiertes Verfahren zur Übertragung von Videoinformation, umfassend eine Mehrzahl an Videoinformationsströmen, an ein Telekommunikationsgerät zur Verfügung zu stellen, wobei es das Verfahren in vergleichsweise einfacher und effizienter Weise ermöglicht, dass wahlweise verschiedene Videoinformationsströme bestimmbar bzw. auswählbar sind und somit ein Mehrwert aus Zuschauersicht generiert wird, insbesondere durch einen hierdurch ermöglichten höheren Grad an Flexibilität und/oder Individualisierung bei der Betrachtung bzw. Zurverfügungstellung der Mehrzahl an Videoinformationsströmen.

Die Aufgabe wird erfindungsgemäß gelöst durch ein Verfahren zur Übertragung von Videoinformation an ein Telekommunikationsgerät mittels eines Telekommunikationsnetzes, wobei das Telekommunikationsgerät eine Anzeigeeinrichtung umfasst oder wobei dem Telekommunikationsgerät eine Anzeigeeinrichtung zugeordnet ist, wobei die Videoinformation eine Mehrzahl an Videoinformationsströmen umfasst, wobei die Mehrzahl an Videoinformationsströmen wenigstens einen ersten Videoinformationsstrom und einen zweiten Videoinformationsstrom umfasst, wobei das Telekommunikationsgerät eingerichtet ist, um wahlweise einen spezifischen Videoinformationsstrom aus der Mehrzahl von Videoinformationsströmen zum Zweck der Anzeige mittels der Anzeigeeinrichtung zu bestimmen oder auszuwählen, wobei das Telekommunikationsnetz ein Inhalteauslieferungsnetzwerk umfasst oder damit verbunden ist, wobei das Telekommunikationsnetz und das Inhalteauslieferungsnetzwerk konfiguriert sind, den bestimmten oder ausgewählten Videoinformationsstrom aus der Mehrzahl von Videoinformationsströmen zum Telekommunikationsgerät zu übertragen, wobei das Telekommunikationsnetz ferner eine inhaltebezogene Hintergrund-Servereinrichtung umfasst oder damit verbunden ist, wobei die inhaltebezogene Hintergrund-Servereinrichtung und das Telekommunikationsgerät zur Übertragung wenigstens einer inhaltebezogenen Videostromsteuerungsnachricht von der inhaltebezogenen Hintergrund-Servereinrichtung zum Telekommunikationsgerät konfiguriert sind,
wobei das Verfahren die nachfolgenden Schritte aufweist:
-- in einem ersten Schritt wird der erste Videoinformationsstrom mittels der Anzeigeeinrichtung angezeigt, wobei hierzu ein entsprechender Datenstrom von dem Inhalteauslieferungsnetzwerk an das Telekommunikationsgerät übertragen wird,
-- in einem dem ersten Schritt nachfolgenden zweiten Schritt, wird wenigstens eine erste inhaltebezogene Videostromsteuerungsnachricht von der inhaltebezogenen Hintergrund-Servereinrichtung zum Telekommunikationsgerät übertragen, wobei die erste inhaltebezogene Videostromsteuerungsnachricht zum einen den zweiten Videoinformationsstrom referenziert und zum anderen eine erste Zeitinformation umfasst, wobei die erste Zeitinformation einen auf den zweiten Videoinformationsstrom bezogenen ersten Wiedergabezeitpunkt des zweiten Videoinformationsstroms referenziert,
-- in einem dem zweiten Schritt nachfolgenden dritten Schritt wird der zweite Videoinformationsstrom, beginnend mit dem ersten Wiedergabezeitpunkt des zweiten Videoinformationsstroms, mittels der Anzeigeeinrichtung angezeigt, wobei hierzu ein entsprechender Datenstrom von dem Inhalteauslieferungsnetzwerk an das Telekommunikationsgerät übertragen wird.

Es ist dadurch gemäß der vorliegenden Erfindung in vorteilhafter Weise möglich, dass eine hochgradige Flexibilisierbarkeit und/oder Individualisierbarkeit bei einer solchen Übertragung von Videoinformation (d.h. bei Vorhandensein und Kombinierbarkeit bzw. Auswählbarkeit einer Mehrzahl an Videoinformationsströmen) erreichbar ist. Erfindungsgemäß ist es insbesondere vorteilhaft möglich, dass zuschauerseitig in einfacher Weise darauf Einfluss genommen werden kann, was auf der Anzeigeeinrichtung des Telekommunikationsgeräts (oder der Anzeigeeinrichtung, die mit dem Telekommunikationsgerät verbunden ist) angezeigt wird, wobei es durch die eine inhaltebezogene Videostromsteuerungsnachricht oder (in der Regel eher) durch eine Mehrzahl von inhaltebezogenen Videostromsteuerungsnachrichten in einfacherer Weise möglich ist, entweder fallweise oder aber nach vorgegebenen (benutzerindividuell einstellbaren) Regeln den jeweils am besten passenden Videoinformationsstrom auszuwählen und zur Anzeige zu bringen.

Gemäß der vorliegenden Erfindung wird somit bei einem Verfahren zur Übertragung von Videoinformation (im ersten Schritt) vorausgesetzt, dass ein Videoinformationsstrom (der Mehrzahl an Videoinformationsströmen) auf der Anzeigeeinrichtung zur Anzeige gebracht wird. Dieser eine Videoinformationsstrom wird somit im Folgenden auch als der erste Videoinformationsstrom bezeichnet und es wird (für die Darstellung des erfindungsgemäßen Verfahrens bzw. auch des erfindungsgemäßen Systems bzw. des Telekommunikationsgeräts bzw. der inhaltebezogenen Hintergrund-Servereinrichtung) davon ausgegangen, dass der erste Videoinformationsstrom mittels der Anzeigeeinrichtung angezeigt wird (was entsprechend erfordert, dass vom Inhalteauslieferungsnetzwerk an das Telekommunikationsgerät ein entsprechender Datenstrom (von typischerweise jedenfalls Videodaten, aber - in aller Regel - sowohl Video- als auch Audiodaten bzw. Videodaten, Audiodaten und Untertiteldaten bzw. Videodaten, Audiodaten, weitere Metadaten sowie ggf. Untertiteldaten) übertragen wird. Generell wird im Kontext der vorliegenden Erfindung davon ausgegangen, dass der Begriff "Videoinformation" bzw. der Begriff "Videoinformationsstrom" (bzw. vergleichbare Begriffe) typischerweise jeweils auch eine entsprechend "Audioinformation" bzw. einen "Audioinformationsstrom" umfasst.

Im zweiten Schritt sieht das Verfahren vor, dass wenigstens eine erste inhaltebezogene Videostromsteuerungsnachricht von der inhaltebezogenen Hintergrund-Servereinrichtung zum Telekommunikationsgerät übertragen wird, wobei die erste inhaltebezogene Videostromsteuerungsnachricht zum einen den zweiten Videoinformationsstrom referenziert und zum anderen eine erste Zeitinformation umfasst, wobei die erste Zeitinformation einen auf den zweiten Videoinformationsstrom bezogenen ersten Wiedergabezeitpunkt des zweiten Videoinformationsstroms referenziert. Erfindungsgemäß wird somit dem Telekommunikationsgerät mit der ersten inhaltebezogenen Videostromsteuerungsnachricht eine Information bezüglich des zweiten Videoinformationsstrom zur Verfügung gestellt. Der Begriff "zweiter Videoinformationsstrom" steht hierbei für einen beliebigen anderen der Mehrzahl von Videoinformationsströmen. Die inhaltebezogene Videostromsteuerungsnachricht referenziert somit nicht lediglich auf den zweiten Videoinformationsstrom (etwa im Sinne eines Umschaltens auf einen weiteren Fernsehkanal oder dergleichen), sondern umfasst mit der ersten Zeitinformation erfindungsgemäß zwingend auch eine Referenz auf einen ersten Wiedergabezeitpunkt des zweiten Videoinformationsstroms. Der erste Wiedergabezeitpunkt des zweiten Videoinformationsstroms steht hierbei insbesondere im Zusammenhang mit einem Ereignis, das aus Zuschauersicht im zweiten Videoinformationsstrom von besonderem Interesse sein könnte, beispielsweise - etwa im Falle eines Fußballspiels - ein Tor oder eine gelbe oder rote Karte oder dergleichen. Hierbei referenziert die erste Zeitinformation und ebenfalls der erste Wiedergabezeitpunkt des zweiten Videoinformationsstroms typischerweise nicht den tatsächlichen Moment (bzw. Zeitpunkt - d.h. im Sinne einer "absoluten" Zeitreferenz) des Tors, sondern einen Zeitpunkt (in der Regel: kurz) vor dem eigentlich interessierenden Ereignis (d.h. mit einem gewissen vorgegebenen Zeitoffset), so dass bei Wiedergabe des zweiten Videoinformationsstroms ab diesem referenzierten Zeitpunkt (d.h. "kurz vor dem eigentlich interessierenden Ereignis") auch der Zusammenhang bzw. die Umstände, die zu dem Ereignis geführt haben, durch Wiedergabe des zweiten Videoinformationsstroms darstellbar sind. Welche Zeitspanne (etwa angegeben in Sekunden) jeweils genau bzw. konkret dem vorgegebenen Zeitoffset entspricht, mag von Fall zu Fall jeweils unterschiedlich sein, es muss jedoch festgelegt sein; beispielsweise muss zumindest für jede Kategorie von Ereignis (einer typischerweise Vielzahl von möglichen Ereigniskategorien) der entsprechende, anzuwendende Zeitoffset festgelegt sein (beispielsweise mag innerhalb eines Fußballspiels einer ersten Ereigniskategorie (etwa Torschuss, der zu einem Tor führt) ein anderer Wert des Zeitoffsets zugeordnet sein als einer zweiten Ereigniskategorie (etwa der Ereigniskategorie "Foul" oder der Ereigniskategorie "gelbe Karte")), es kann jedoch auch ein Zeitoffsetwert bzw. eine Zeitoffsetinformation ereignisindividuell angewendet werden.

Erfindungsgemäß wird die erste inhaltebezogene Videostromsteuerungsnachricht (in der Regel genauso wie jede andere oder weitere inhaltebezogene Videostromsteuerungsnachricht) generiert bzw. getriggert dadurch, dass die inhaltebezogene Hintergrund-Servereinrichtung ein Signal bzw. eine Information von einem Informationsauslieferer bzw. Datenprovider erhält bzw. ein solches Signal bzw. eine solche Information vom Datenprovider an die inhaltebezogene Hintergrund-Servereinrichtung übertragen wird. Beispiele hierfür sind etwa Datenprovider, die mit zum Teil extrem geringem Zeitversatz zum tatsächlichen Ereigniszeitpunkt entsprechende Signale (mit Metainformation versehen, welche die Natur des Ereignisses beschreibt bzw. angibt), insbesondere in Form eines Datenstroms bzw. eines Datenflusses bzw. data feed bereitstellen - und im vorliegenden Fall an die inhaltebezogene Hintergrund-Servereinrichtung übermitteln. Für den Fall, dass ein Zeitoffsetwert bzw. eine Zeitoffsetinformation ereignisindividuell vorgesehen ist, so ist es gemäß der vorliegenden Erfindung besonders bevorzugt, wenn eine solche ereignisindividuelle Zeitoffsetinformation (bzw. ein solcher ereignisindividuelle Zeitoffsetwert) von dem Informationsauslieferer bzw. Datenprovider an die inhaltebezogene Hintergrund-Servereinrichtung übertragen wird.

Im dritten Schritt des erfindungsgemäßen Verfahrens wird - als Folge der Übertragung der ersten inhaltebezogenen Videostromsteuerungsnachricht (mit (definitionsgemäß der) Referenzierung des zweiten Videoinformationsstrom) zum Telekommunikationsgerät und einer damit korrespondierenden Anforderung (ausgehend vom Telekommunikationsgerät an das Inhalteauslieferungsnetzwerk) den zweiten Videoinformationsstrom zur Realisierung seiner Wiedergabe zu übertragen - der zweite Videoinformationsstrom, beginnend mit dem ersten Wiedergabezeitpunkt des zweiten Videoinformationsstroms, mittels der Anzeigeeinrichtung angezeigt, wobei hierzu ein entsprechender Datenstrom von dem Inhalteauslieferungsnetzwerk an das Telekommunikationsgerät übertragen wird (bzw. vom Telekommunikationsgerät empfangen wird). Die mit der ersten inhaltebezogenen Videostromsteuerungsnachricht korrespondierende Anforderung entspricht erfindungsgemäß entweder einer (expliziten und auf die konkrete erste inhaltebezogene Videostromsteuerungsnachricht bezogenen) Benutzerauswahlinteraktion (zwingenderweise zeitlich nach Erhalt bzw. nach Eingang der ersten inhaltebezogenen Videostromsteuerungsnachricht beim Telekommunikationsgerät) oder sie entspricht einer (insbesondere benutzerindividuellen) Voreinstellung des Telekommunikationsgeräts (d.h. zeitlich vor Erhalt bzw. vor dem Eingang der ersten inhaltebezogenen Videostromsteuerungsnachricht beim Telekommunikationsgerät), sodass die entsprechende mit der ersten inhaltebezogenen Videostromsteuerungsnachricht korrespondierende Anforderung quasi automatisch (und jedenfalls ohne weitere Benutzerinteraktion zeitlich nach dem Eingang der ersten inhaltebezogenen Videostromsteuerungsnachricht beim Telekommunikationsgerät) erfolgt.

Erfindungsgemäß findet die Übertragung der Videoinformation (bzw. die Übertragung eines Videoinformationsstroms oder eines Teils der Videoinformationsströme der Videoinformation) zum Telekommunikationsgerät (bzw. zu der Anzeigeeinrichtung des Telekommunikationsgeräts bzw. zu der Anzeigeeinrichtung, die mit dem Telekommunikationsgerät verbunden ist) mittels des Telekommunikationsnetzes statt. Bei dem Telekommunikationsnetz handelt es sich insbesondere um ein IP-basiertes Telekommunikationsnetz, bei dem die Datenübertragung gemäß dem Internet Protocol stattfindet. Beim Telekommunikationsnetz kann es sich insbesondere um ein Festnetz-Telekommunikationsnetz handeln, d.h. das Telekommunikationsnetz weist ein Zugangsnetz mit überwiegend drahtgebundener Anbindung des Telekommunikationsgeräts auf, oder aber um ein Mobilfunkkommunikationsnetz handeln, d.h. das Telekommunikationsnetz weist ein Zugangsnetz mit überwiegend drahtloser Anbindung des Telekommunikationsgeräts auf. Mit "überwiegend drahtgebundener Anbindung" ist hierbei - im Falle eines Festnetz-Telekommunikationsnetzes - beispielsweise der erfindungsgemäß nicht ausgeschlossene Fall gemeint, dass eine Router-Einrichtung oder eine Homegateway-Einrichtung drahtgebunden mit dem Zugangsnetz (des Festnetz-Telekommunikationsnetzes) verbunden oder an dieses angeschlossen ist, jedoch das eigentliche Telekommunikationsgerät (in Form etwa eines Mobiltelefons oder eines Tablett-Computers und/oder einer Smart-TV-Einrichtung) lokal drahtlos (etwa über WLAN) an die Router-Einrichtung oder Homegateway-Einrichtung angebunden ist. Umgekehrt ist mit "überwiegend drahtloser Anbindung" -im Falle eines Mobilfunkkommunikationsnetzes - beispielsweise der Fall gemeint, dass das eigentliche Telekommunikationsgerät (etwa eine Smart-TV-Einrichtung) lokal drahtgebunden beispielsweise mit einer Router-Einrichtung oder Homegateway-Einrichtung verbunden ist, die jedoch ihrerseits Teil eines Mobilfunkkommunikationsnetzes ist, d.h. mit einer Basisstationseinrichtung des Mobilfunkkommunikationsnetzes (drahtlos) verbunden ist.

Erfindungsgemäß weist das Telekommunikationsnetz ein Inhalteauslieferungsnetzwerk auf bzw. mit einem solchen verbunden bzw. hat Zugriff darauf. Das Telekommunikationsnetz und das Inhalteauslieferungsnetzwerk sind erfindungsgemäß derart konfiguriert dass, der durch das Telekommunikationsgerät ausgewählte bzw. bestimmte Videoinformationsstrom aus der Mehrzahl von Videoinformationsströmen (in definierter Weise, d.h. insbesondere beginnend mit einem bestimmten (vom Telekommunikationsgerät angeforderten) Wiedergabezeitpunkt) zum Telekommunikationsgerät übertragen wird. Ferner weist das Telekommunikationsnetz eine inhaltebezogene Hintergrund-Servereinrichtung auf bzw. ist mit einer solchen verbunden bzw. hat Zugriff darauf. Die inhaltebezogene Hintergrund-Servereinrichtung und das Telekommunikationsgerät sind erfindungsgemäß zur Übertragung der (typischerweise Mehrzahl) von inhaltebezogenen Videostromsteuerungsnachrichten von der inhaltebezogenen Hintergrund-Servereinrichtung zum Telekommunikationsgerät konfiguriert.

Gemäß einer bevorzugten Ausführungsform der vorliegenden Erfindung ist es vorgesehen, dass im zweiten Schritt mittels der Anzeigeeinrichtung eine erste Wiedergabeoptionsinformation angezeigt wird, wobei der zweite Videoinformationsstrom und der erste Wiedergabezeitpunkt des zweiten Videoinformationsstroms - insbesondere nach einer Auswahloperation mit Bezug zur Wiedergabeoptionsinformation - aufgrund einer hierzu korrespondierenden ersten Videostromauswahlnachricht zur Wiedergabe ausgewählt wird, wobei die erste Videostromauswahlnachricht vom Telekommunikationsgerät zum Telekommunikationsnetz übertragen wird.

Durch die Anzeige der ersten erste Wiedergabeoptionsinformation auf der Anzeigeeinrichtung ist es erfindungsgemäß in vorteilhafter Weise möglich, dass benutzerinduziert und benutzerindividuell in sehr einfacher, und bequemer Weise und zeitlich vergleichsweise schnell eine benutzerindividuelle Auswahl dahingehend getroffen werden kann, ob der zweite Videoinformationsstrom anstelle des im ersten Schritt wiedergegebenen ersten Videoinformationsstroms) wiedergegeben werden soll. Die auf der oder mittels der Anzeigeeinrichtung dargestellte Wiedergabeoptionsinformation weist erfindungsgemäß insbesondere einen Hinweis oder eine Hinweisinformation auf, die es in einfacher, schneller und bequemer Weise ermöglicht, die Entscheidung zu treffen, ob zum zweiten Videoinformationsstrom umgeschaltet werden soll (zum Zwecke der Wiedergabe des möglicherweise interessierenden - durch die erste inhaltebezogene Videostromsteuerungsnachricht und ebenfalls durch die erste Wiedergabeoptionsinformation referenzierte - Ereignis innerhalb des zweiten Videoinformationsstroms) oder nicht.
Durch die Ermöglichung einer auf die erste Wiedergabeoptionsinformation referenzierenden Auswahloperation ist es benutzerindividuell, einfach sowie äußerst flexibel und interaktiv möglich, die Wiedergabe auf den zweiten Videoinformationsstrom umzuschalten. Hierbei kann es erfindungsgemäß vorgesehen oder voreingestellt sein oder werden, dass (trotz oder anstelle der Anzeige der ersten Wiedergabeoptionsinformation auf der Anzeigeeinrichtung) die Umschaltung auf die Wiedergabe des zweiten Videoinformationsstrom (d.h. auf den zweiten Videoinformationsstrom zum ersten Wiedergabezeitpunkt des zweiten Videoinformationsstroms) automatisch im Sinne einer benutzerindividuellen Voreinstellung (d.h. zeitlich vor dem Zeitpunkt des Eingangs der ersten inhaltebezogenen Videostromsteuerungsnachricht beim Telekommunikationsgerät) erfolgt. Insbesondere ist es erfindungsgemäß vorgesehen, dass zur eigentlichen Bewirkung des Umschaltens auf den zweiten Videoinformationsstrom (beginnend mit dem Zeitpunkt des ersten Wiedergabezeitpunkts des zweiten Videoinformationsstroms) das Telekommunikationsgerät die hierzu korrespondierende (d.h. die insbesondere zur ersten inhaltebezogenen Videostromsteuerungsnachricht korrespondierende) erste Videostromauswahlnachricht zum Telekommunikationsnetz (insbesondere zum Inhalteauslieferungsnetzwerk) überträgt.

Gemäß einer weiteren Ausführungsform der vorliegenden Erfindung ist es vorgesehen, dass wenigstens der erste Videoinformationsstrom ein Livevideoinformationsstrom ist, wobei insbesondere der zweite Videoinformationsstrom entweder ebenfalls ein Livevideoinformationsstrom oder aber ein On-demand-Videoinformationsstrom ist.

Dadurch dass es sich bei dem ersten Videoinformationsstrom um einen Livevideoinformationsstrom handelt, ist es erfindungsgemäß möglich, dass mittels des Verfahrens zur Übertragung von Videoinformationen sehr aktuelle Informationen - quasi in Echtzeit oder zumindest näherungsweise in Echtzeit - übertragen werden können. Insbesondere ist es erfindungsgemäß vorgesehen, dass der erste Videoinformationsstrom in dem Sinne ein Livevideoinformationsstrom ist, als dass der Zeitverzug zwischen dem Zeitpunkt des tatsächlichen Ereignisses (gemäß einer beliebigen objektiven Zeitbasis) und der Darstellung bzw. Wiedergabe auf der Anzeigeeinrichtung des Telekommunikationsgeräts jedenfalls geringer ist als wenige Minuten, bevorzugt geringer als eine Minute (d.h. 60 Sekunden), besonders bevorzugt geringer als 15 Sekunden (insbesondere im Fall von mittels eines Multicast-Übertragungsverfahrens übertragenen Videoinformationsströmen) oder besonders bevorzugt geringer als 40 Sekunden (insbesondere im Fall von mittels eines Unicast-Übertragungsverfahrens übertragenen Videoinformationsströmen) und ferner besonders bevorzugt geringer als 10 Sekunden oder geringer als 8 Sekunden oder geringer als 6 Sekunden oder geringer als 5 Sekunden.

Gemäß einer weiteren Ausführungsform der vorliegenden Erfindung ist es vorgesehen, dass im ersten Schritt der erste Videoinformationsstrom bis zu einem auf den ersten Videoinformationsstrom bezogenen ersten Wiedergabezeitpunkt des ersten Videoinformationsstroms angezeigt wird, dass die im dritten Schritt erfolgende Wiedergabe des zweiten Videoinformationsstroms für die Dauer eines ersten - insbesondere benutzerdefinierten und insbesondere vorgegebenen - Zeitintervalls, erfolgt, wobei nach dem ersten Zeitintervall die Wiedergabe des zweiten Videoinformationsstrom beendet wird und der erste Videoinformationsstrom mittels der Anzeigeeinrichtung angezeigt wird, wobei der erste Videoinformationsstrom
-- beginnend mit dem ersten Wiedergabezeitpunkt des ersten Videoinformationsstroms, insbesondere mit originaler Wiedergabegeschwindigkeit, angezeigt wird,
   oder
-- beginnend mit dem ersten Wiedergabezeitpunkt des ersten Videoinformationsstroms angezeigt wird, wobei die Wiedergabegeschwindigkeit gegenüber der originalen Wiedergabegeschwindigkeit erhöht ist, insbesondere bis zu einem Wiedergabezeitpunkt, bei dem das erste Zeitintervall durch die erhöhte Wiedergabegeschwindigkeit ausgeglichen oder aufgeholt ist,
   oder
-- beginnend mit einem weiteren Wiedergabezeitpunkt des ersten Videoinformationsstroms angezeigt wird, wobei sich der weitere Wiedergabezeitpunkt aus dem ersten Wiedergabezeitpunkt des ersten Videoinformationsstroms zuzüglich des ersten Zeitintervalls ergibt.

Hierdurch ist es gemäß solcher Ausführungsformen der Erfindung möglich, dass ein besonders hohes Maß an Flexibilität bzw. Individualisierbarkeit der Übertragung von Videoinformation möglich ist. So ist es insbesondere (außerhalb solcher hier genannten Ausführungsformen) ohnehin als eine Alternative der Wiedergabe möglich, dass nach erfolgter Umschaltung auf die Wiedergabe des zweiten Videoinformationsstroms keine weitere Änderung mehr erfolgt (d.h. die Wiedergabe des zweiten Videoinformationsstroms wird einfach (ohne zeitliche Begrenzung) fortgesetzt). Umgekehrt ist es jedoch gemäß solcher hier genannter Ausführungsformen der Erfindung möglich, dass die im dritten Schritt erfolgende (bzw. beginnende) Wiedergabe des zweiten Videoinformationsstroms (jedoch beginnend mit dem ersten Wiedergabezeitpunkt des zweiten Videoinformationsstroms) lediglich für die Dauer des ersten Zeitintervalls erfolgt, d.h. zeitlich begrenzt ist, wobei nach dem ersten Zeitintervall die Wiedergabe des zweiten Videoinformationsstrom beendet wird und (wieder) der erste Videoinformationsstrom mittels der Anzeigeeinrichtung angezeigt wird, wobei der erste Videoinformationsstrom entweder an der Stelle des Umschaltzeitpunkts (d.h. beginnend mit dem ersten Wiedergabezeitpunkt des ersten Videoinformationsstroms) angezeigt wird oder aber zu einem späteren Zeitpunkt, insbesondere an der Stelle des Endes des ersten Zeitintervalls (d.h. beginnend mit einem weiteren Wiedergabezeitpunkt des ersten Videoinformationsstroms angezeigt wird, wobei sich der weitere Wiedergabezeitpunkt aus dem ersten Wiedergabezeitpunkt des ersten Videoinformationsstroms zuzüglich des ersten Zeitintervalls ergibt), angezeigt wird; es kommen hier beliebige Zwischenzeitpunkte zwischen dem Umschaltzeitpunkt und dem weiteren Wiedergabezeitpunkt in Frage. Die Fortsetzung der Wiedergabe des ersten Videoinformationsstroms zum Zeitpunkt des weiteren Wiedergabezeitpunkts stellt sozusagen die Wiedergabe des aktuellsten Videoinhalts dar; jegliches Zurückspringen (insbesondere bis auf den Umschaltzeitpunkt bzw. auf einen Zwischenzeitpunkt) bedingt, dass die Wiedergabe des ersten Videoinformationsstroms mit einem Zeitversatz (gegenüber einer Fortsetzung der Wiedergabe des ersten Videoinformationsstroms zum Zeitpunkt des weiteren Wiedergabezeitpunkts) stattfindet. Gemäß einer Variante des erfindungsgemäßen Verfahrens ist es nun vorgesehen, dass versucht wird, diesen Zeitversatz wieder aufzuholen, etwa dadurch, dass die Wiedergabegeschwindigkeit - zumindest für eine gewisse Übergangszeit - erhöht wird, so dass der angesprochene Zeitversatz zumindest teilweise aufgeholt wird.

Gemäß einer weiteren Ausführungsform der vorliegenden Erfindung referenziert die erste Zeitinformation den ersten Wiedergabezeitpunkt des zweiten Videoinformationsstroms mittels einer Zeitstempelinformation, wobei sich die Zeitstempelinformation auf einen absoluten Zeitpunkt, insbesondere die koordinierte Weltzeit [Universal Coordinated Time, UTC], bezieht.

Hierdurch ist es gemäß der vorliegenden Erfindung in einfacher Weise möglich, eine für alle verschiedenen Videoinformationsströme der Videoinformation in gleicher Weise anwendbare Zeitbasis zu definieren. Inbesondere bezieht sich die Zeitstempelinformation konkret auf den Konvertierungszeitpunkt oder Kodierzeitpunkt des Videomaterials der verschiedenen Videoinformationsströme der Videoinformation und eher nicht auf den wirklichen Ereigniszeitpunkt der Ereignisse. Gemäß der vorliegenden Erfindung wird jedoch angenommen bzw. davon ausgegangen, dass in aller Regel ein im Wesentlichen relativ konstanter Zeitversatz zwischen dem eigentlichen Zeitpunkt eines Ereignisses einerseits und dem Zeitpunkt der zugehörigen Zeitstempelinformation - d.h. für den Durchlauf durch die Verarbeitungskette der Videoinformation vom Aufnahmezeitpunkt durch eine Kamera, etwa im Fußballstadion, bis zum Konversionszeitpunkt bzw. Konvertierungszeitpunkt bzw. Kodierzeitpunkt und dem Bereitstehen der Videoinformation zur Übertragung vom Telekommunikationsnetz zum Telekommunikationsgerät, insbesondere vom Inhalteauslieferungsnetzwerk zum Telekommunikationsgerät - vorliegt.

Gemäß einer weiteren Ausführungsform der vorliegenden Erfindung ist es vorgesehen, dass in einem dem ersten Schritt nachfolgenden vierten Schritt wenigstens eine zweite inhaltebezogene Videostromsteuerungsnachricht von der inhaltebezogenen Hintergrund-Servereinrichtung zum Telekommunikationsgerät übertragen wird, wobei die zweite inhaltebezogene Videostromsteuerungsnachricht zum einen den zweiten Videoinformationsstrom referenziert und zum anderen eine zweite Zeitinformation umfasst, wobei die zweite Zeitinformation einen auf den zweiten Videoinformationsstrom bezogenen zweiten Wiedergabezeitpunkt referenziert, wobei in einem, dem vierten Schritt nachfolgenden Schritt der zweite Videoinformationsstrom, beginnend mit dem zweiten Wiedergabezeitpunkt, mittels der Anzeigeeinrichtung angezeigt wird, wobei hierzu ein entsprechender Datenstrom von dem Inhalteauslieferungsnetzwerk an das Telekommunikationsgerät übertragen wird.

Hierdurch ist es erfindungsgemäß vorteilhaft möglich, dass - auch bezogen auf den gleichen zweiten Videoinformationsstrom - eine Mehrzahl von inhaltebezogenen Videostromsteuerungsnachrichten zum Telekommunikationsgerät übertragen werden können. Typischerweise werden alle diese inhaltebezogenen Videostromsteuerungsnachrichten entsprechend der ersten inhaltebezogenen Videostromsteuerungsnachricht behandelt, d.h. es kommt zu einer korrespondierenden jeweiligen (zweiten bzw. weiteren) Wiedergabeoptionsinformation, die auf bzw. mittels der Anzeigeeinrichtung angezeigt wird. Entsprechend ist es möglich, dass - falls dies benutzerseitig entweder für jede oder ein Teil dieser zweiten bzw. weiteren Wiedergabeoptionsinformationen individuell und im Nachhinein oder aber per Voreinstellung automatisch ausgewählt ist - auf den jeweiligen Videoinformationsstrom bzw. den jeweiligen Videoinformationsstrom zum jeweils referenzierten Wiedergabezeitpunkt umgeschaltet wird. Anstelle dass die zweite inhaltebezogene Videostromsteuerungsnachricht den zweiten Videoinformationsstrom und einen auf den zweiten Videoinformationsstrom bezogenen zweiten Wiedergabezeitpunkt referenziert, könnte die zweite inhaltebezogene Videostromsteuerungsnachricht alternativ auch einen dritten Videoinformationsstrom (und entsprechend einen hierauf bezogenen Wiedergabezeitpunkt) referenzieren; in diesem Fall würde (nach einer entsprechenden Benutzerinteraktion oder per Vorauswahl) in einem weiteren Zeitpunkt bzw. Schritt (der funktional dem dritten Schritt entspricht) die Wiedergabe auf der Anzeigeeinrichtung zum dritten Videoinformationsstrom (anstelle zum zweiten Videoinformationsstrom) umgeschaltet.

Gemäß einer weiteren Ausführungsform der vorliegenden Erfindung ist es vorgesehen, dass das Telekommunikationsnetz ein Nachrichtengateway umfasst oder damit verbunden ist, wobei das Telekommunikationsnetz und das Nachrichtengateway konfiguriert sind, die erste inhaltebezogene Videostromsteuerungsnachricht zum Telekommunikationsgerät zu übertragen oder diesem zur Verfügung zu stellen, wobei das Telekommunikationsgerät konfiguriert ist, die erste inhaltebezogene Videostromsteuerungsnachricht vom Nachrichtengateway zu empfangen, wobei die erste inhaltebezogene Videostromsteuerungsnachricht insbesondere
-- in einem ersten Teilschritt des zweiten Schritts von der inhaltebezogenen Hintergrund-Servereinrichtung zu dem Nachrichtengateway übertragen wird und
-- in einem zweiten Teilschritt des zweiten Schritts von dem Nachrichtengateway zum Telekommunikationsgerät übertragen wird,
wobei das Nachrichtengateway insbesondere als
   -- loT-Gateway oder als
   -- REST-Gateway oder als
   -- Push-Gateway
      konfiguriert ist.

Hierdurch ist es gemäß einer Ausführungsform der Erfindung in vorteilhafter Weise möglich, dass die erste (und damit auch jede weitere) inhaltebezogene Videostromsteuerungsnachricht in effizienter Weise zum Telekommunikationsgerät übertragen wird.

Gemäß einer weiteren Ausführungsform der vorliegenden Erfindung ist es vorgesehen, dass der erste Videoinformationsstrom ein Multicastinformationsstrom - insbesondere ein über IPTV (Internet Protocol Television) oder DVB-T (Digital Versatile Broadcast - Terrestric) oder DVB-Sat (Digital Versatile Broadcast - Satellite) übertragener Videoinformationsstrom - und der zweite Videoinformationsstrom ein Unicastinformationsstrom und weitere Videoinformationsströme Unicastinformationsströme sind oder dass sowohl der erste als auch der zweite Videoinformationsstrom (sowie weitere Videoinformationsströme) jeweils ein Unicastinformationsstrom ist bzw. sind.

Hierdurch ist es erfindungsgemäß vorteilhaft möglich, das erfindungsgemäße Verfahren zur Übertragung von Videoinformation unabhängig vom Übertragungsverfahren des einzelnen Videoinformationsstroms durchzuführen, d.h. es ist erfindungsgemäß sowohl möglich, dass der erste Videoinformationsstrom als IPTV-Multicast- oder DVB-T-Multicast- oder DVB-Sat-Multicast-Datenstrom übertragen wird und der zweite bzw. jeder weitere Videoinformationsstrom als insbesondere IPTV-Unicast-Datenstrom übertragen wird.

Des Weiteren wird die Aufgabe gelöst durch ein System zur Übertragung von Videoinformation an ein Telekommunikationsgerät mittels eines Telekommunikationsnetzes, wobei das Telekommunikationsgerät eine Anzeigeeinrichtung umfasst oder wobei dem Telekommunikationsgerät eine Anzeigeeinrichtung zugeordnet ist,
wobei die Videoinformation eine Mehrzahl an Videoinformationsströmen umfasst, wobei die Mehrzahl an Videoinformationsströmen wenigstens einen ersten Videoinformationsstrom und einen zweiten Videoinformationsstrom umfasst,
wobei das Telekommunikationsgerät eingerichtet ist, um wahlweise einen spezifischen Videoinformationsstrom aus der Mehrzahl von Videoinformationsströmen zum Zweck der Anzeige mittels der Anzeigeeinrichtung zu bestimmen oder auszuwählen,
wobei das Telekommunikationsnetz ein Inhalteauslieferungsnetzwerk umfasst oder damit verbunden ist, wobei das Telekommunikationsnetz und das Inhalteauslieferungsnetzwerk konfiguriert sind, den bestimmten oder ausgewählten Videoinformationsstrom aus der Mehrzahl von Videoinformationsströmen zum Telekommunikationsgerät zu übertragen, wobei das Telekommunikationsnetz ferner eine inhaltebezogene Hintergrund-Servereinrichtung umfasst oder damit verbunden ist, wobei die inhaltebezogene Hintergrund-Servereinrichtung und das Telekommunikationsgerät zur Übertragung wenigstens einer inhaltebezogenen Videostromsteuerungsnachricht von der inhaltebezogenen Hintergrund-Servereinrichtung zum Telekommunikationsgerät konfiguriert sind,
wobei das System derart konfiguriert ist, dass:
   -- der erste Videoinformationsstrom mittels der Anzeigeeinrichtung angezeigt wird, wobei hierzu ein entsprechender Datenstrom von dem Inhalteauslieferungsnetzwerk an das Telekommunikationsgerät übertragen wird,
   -- wenigstens eine erste inhaltebezogene Videostromsteuerungsnachricht von der inhaltebezogenen Hintergrund-Servereinrichtung zum Telekommunikationsgerät übertragen wird, wobei die erste inhaltebezogene Videostromsteuerungsnachricht zum einen den zweiten Videoinformationsstrom referenziert und zum anderen eine erste Zeitinformation umfasst, wobei die erste Zeitinformation einen auf den zweiten Videoinformationsstrom bezogenen ersten Wiedergabezeitpunkt des zweiten Videoinformationsstroms referenziert,
   -- der zweite Videoinformationsstrom, beginnend mit dem ersten Wiedergabezeitpunkt des zweiten Videoinformationsstroms, mittels der Anzeigeeinrichtung angezeigt wird, wobei hierzu ein entsprechender Datenstrom von dem Inhalteauslieferungsnetzwerk an das Telekommunikationsgerät übertragen wird.

Es ist dadurch gemäß der vorliegenden Erfindung in vorteilhafter Weise möglich, ein zum erfindungsgemäßen Verfahren korrespondierendes erfindungsgemäßes System bereitzustellen und somit eine hochgradige Flexibilisierbarkeit und/oder Individualisierbarkeit bei der Übertragung von Videoinformation zu erreichen.

Die Aufgabe wird ferner gelöst durch ein Telekommunikationsgerät zum Empfang von Videoinformation mittels eines Telekommunikationsnetzes, wobei das Telekommunikationsgerät eine Anzeigeeinrichtung umfasst oder wobei dem Telekommunikationsgerät eine Anzeigeeinrichtung zugeordnet ist, wobei die Videoinformation eine Mehrzahl an Videoinformationsströmen umfasst, wobei die Mehrzahl an Videoinformationsströmen wenigstens einen ersten Videoinformationsstrom und einen zweiten Videoinformationsstrom umfasst, wobei das Telekommunikationsgerät eingerichtet ist, um wahlweise einen spezifischen Videoinformationsstrom aus der Mehrzahl von Videoinformationsströmen zum Zweck der Anzeige mittels der Anzeigeeinrichtung zu bestimmen oder auszuwählen, wobei ein Inhalteauslieferungsnetzwerk des Telekommunikationsnetzes konfiguriert sind, den bestimmten oder ausgewählten Videoinformationsstrom aus der Mehrzahl von Videoinformationsströmen zum Telekommunikationsgerät zu übertragen, wobei das Telekommunikationsgerät und eine inhaltebezogene Hintergrund-Servereinrichtung des Telekommunikationsnetzes konfiguriert sind zum Empfang wenigstens einer inhaltebezogenen Videostromsteuerungsnachricht von der inhaltebezogenen Hintergrund-Servereinrichtung,
wobei das Telekommunikationsgerät derart konfiguriert ist, dass:
-- der erste Videoinformationsstrom mittels der Anzeigeeinrichtung angezeigt wird, wobei hierzu ein entsprechender Datenstrom von dem Telekommunikationsgerät empfangen wird,
-- wenigstens eine erste inhaltebezogene Videostromsteuerungsnachricht von der inhaltebezogenen Hintergrund-Servereinrichtung vom Telekommunikationsgerät empfangen wird, wobei die erste inhaltebezogene Videostromsteuerungsnachricht zum einen den zweiten Videoinformationsstrom referenziert und zum anderen eine erste Zeitinformation umfasst, wobei die erste Zeitinformation einen auf den zweiten Videoinformationsstrom bezogenen ersten Wiedergabezeitpunkt des zweiten Videoinformationsstroms referenziert,
-- der zweite Videoinformationsstrom, beginnend mit dem ersten Wiedergabezeitpunkt des zweiten Videoinformationsstroms, mittels der Anzeigeeinrichtung angezeigt wird, wobei hierzu ein entsprechender Datenstrom von dem Inhalteauslieferungsnetzwerk an vom Telekommunikationsgerät empfangen wird.

Es ist dadurch gemäß der vorliegenden Erfindung in vorteilhafter Weise möglich, ein zum erfindungsgemäßen Verfahren korrespondierendes erfindungsgemäßes Telekommunikationsgerät bereitzustellen und somit eine hochgradige Flexibilisierbarkeit und/oder Individualisierbarkeit bei der Übertragung von Videoinformation zu erreichen.

Ferner wird die Ausgabe gelöst durch eine inhaltebezogene Hintergrund-Servereinrichtung zur Übertragung von Videoinformation an ein Telekommunikationsgerät mittels eines Telekommunikationsnetzes, wobei das Telekommunikationsgerät eine Anzeigeeinrichtung umfasst oder wobei dem Telekommunikationsgerät eine Anzeigeeinrichtung zugeordnet ist,
wobei die Videoinformation eine Mehrzahl an Videoinformationsströmen umfasst, wobei die Mehrzahl an Videoinformationsströmen wenigstens einen ersten Videoinformationsstrom und einen zweiten Videoinformationsstrom umfasst,
wobei die inhaltebezogene Hintergrund-Servereinrichtung konfiguriert ist, um dem Telekommunikationsgerät zu ermöglichen, wahlweise einen spezifischen Videoinformationsstrom aus der Mehrzahl von Videoinformationsströmen zum Zweck der Anzeige mittels der Anzeigeeinrichtung zu bestimmen oder auszuwählen,
wobei das Telekommunikationsnetz ein Inhalteauslieferungsnetzwerk umfasst oder damit verbunden ist, wobei das Telekommunikationsnetz und das Inhalteauslieferungsnetzwerk konfiguriert sind, den bestimmten oder ausgewählten Videoinformationsstrom aus der Mehrzahl von Videoinformationsströmen zum Telekommunikationsgerät zu übertragen,
wobei die inhaltebezogene Hintergrund-Servereinrichtung Teil des Telekommunikationsnetzes oder mit diesem verbunden ist, wobei die inhaltebezogene Hintergrund-Servereinrichtung und das Telekommunikationsgerät zur Übertragung wenigstens einer inhaltebezogenen Videostromsteuerungsnachricht von der inhaltebezogenen Hintergrund-Servereinrichtung zum Telekommunikationsgerät konfiguriert sind,
wobei die inhaltebezogene Hintergrund-Servereinrichtung derart konfiguriert ist, dass:
   -- der erste Videoinformationsstrom mittels der Anzeigeeinrichtung angezeigt wird, wobei hierzu ein entsprechender Datenstrom von dem Inhalteauslieferungsnetzwerk an das Telekommunikationsgerät übertragen wird,
   -- wenigstens eine erste inhaltebezogene Videostromsteuerungsnachricht von der inhaltebezogenen Hintergrund-Servereinrichtung zum Telekommunikationsgerät übertragen wird, wobei die erste inhaltebezogene Videostromsteuerungsnachricht zum einen den zweiten Videoinformationsstrom referenziert und zum anderen eine erste Zeitinformation umfasst, wobei die erste Zeitinformation einen auf den zweiten Videoinformationsstrom bezogenen ersten Wiedergabezeitpunkt des zweiten Videoinformationsstroms referenziert,
   -- der zweite Videoinformationsstrom, beginnend mit dem ersten Wiedergabezeitpunkt des zweiten Videoinformationsstroms, mittels der Anzeigeeinrichtung angezeigt wird,
wobei hierzu ein entsprechender Datenstrom von dem Inhalteauslieferungsnetzwerk an das Telekommunikationsgerät übertragen wird.

Es ist dadurch gemäß der vorliegenden Erfindung in vorteilhafter Weise möglich, eine zum erfindungsgemäßen Verfahren korrespondierende erfindungsgemäße inhaltebezogene Hintergrund-Servereinrichtung bereitzustellen und somit eine hochgradige Flexibilisierbarkeit und/oder Individualisierbarkeit bei der Übertragung von Videoinformation zu erreichen.

Des Weiteren wird die Ausgabe gelöst durch ein Computerprogramm umfassend Befehle, mit deren Hilfe die Schritte eines erfindungsgemäßen Verfahrens durchführbar sind, wenn das Computerprogramm auf einer programmierbaren Einrichtung, insbesondere auf dem Telekommunikationsgerät und/oder der inhaltebezogenen Hintergrund-Servereinrichtung ausgeführt wird.

Des Weiteren wird die Ausgabe gelöst durch ein computerlesbares Medium, vorgesehen zur Speicherung eines Computerprogramms, oder Datenträgersignal, vorgesehen zur Übertragung eines Computerprogramms, wobei das computerlesbare Medium oder das Datenträgersignal das erfindungsgemäße Computerprogramm speichert oder überträgt oder wobei das computerlesbare Medium oder das Datenträgersignal den auf der programmierbaren Einrichtung, insbesondere auf dem Telekommunikationsgerät und/oder der inhaltebezogenen Hintergrund-Servereinrichtung auszuführenden Teil des erfindungsgemäßen Computerprogramms speichert oder überträgt.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt eine schematische Ansicht eines Mobilfunkkommunikationsnetzes als Beispiel eines Telekommunikationsnetzes.
- **Figur 2**: zeigt schematisch ein Kommunikationsdiagramm gemäß einer beispielhaften erfindungsgemäßen Situation.
- **Figur 3**: zeigt schematisch den zeitlichen Verlauf eines beispielhaften Resultats einer erfindungsgemäßen Situation auf der Anzeigeeinrichtung.
- **Figur 4**: zeigt schematisch die Darstellung der Anzeigeeinrichtung für zwei Zeitpunkte des zeitlichen Verlaufs gemäß Figur 3.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

Die vorliegende Erfindung wird in Bezug auf bestimmte Ausführungsformen und mit Bezug auf bestimmte Zeichnungen beschrieben, aber die Erfindung ist nicht darauf beschränkt, sondern nur durch die Ansprüche. Die beschriebenen Zeichnungen sind nur schematisch und nicht einschränkend. In den Zeichnungen kann die Größe einiger Elemente übertrieben sein und nicht im Maßstab zur Veranschaulichung gezeichnet werden.

Wenn ein unbestimmter oder ein bestimmter Artikel verwendet wird, wenn auf ein einzelnes Substantiv Bezug genommen wird, z.B. "ein", "eine", "der", "die", "das", schließt dies einen Plural dieses Substantivs ein, sofern nicht ausdrücklich etwas anderes angegeben ist.

Darüber hinaus werden die Begriffe erste, zweite, dritte und dergleichen in der Beschreibung und in den Ansprüchen zur Unterscheidung zwischen ähnlichen Elementen und nicht unbedingt zur Beschreibung einer sequentiellen oder chronologischen Reihenfolge verwendet. Es ist zu verstehen, dass die so verwendeten Begriffe unter geeigneten Umständen austauschbar sind und dass die Ausführungsformen der hierin beschriebenen Erfindung in anderer Abfolge als den hierin beschriebenen oder veranschaulichten funktionieren können.

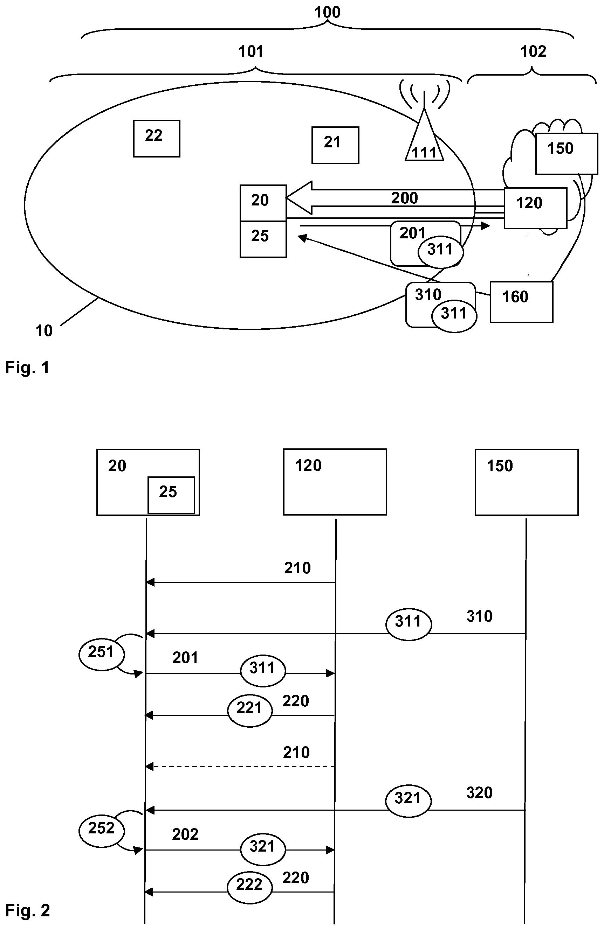

In Figur 1 ist schematisch eine Ansicht eines Mobilfunkkommunikationsnetzes als Beispiel eines Telekommunikationsnetzes 100 dargestellt. Das Telekommunikationsnetz 100 (bzw. das Mobilfunkkommunikationsnetz) umfasst in der Regel gemäß der vorliegenden Erfindung (jedoch nicht notwendigerweise) ein Zugangsnetz 101 und ein Kernnetz 102. Im Fall eines Mobilfunkkommunikationsnetzes als Beispiel eines Telekommunikationsnetzes 100 ist dieses in der Regel als sogenanntes zelluläres Netz realisiert, d.h. das Zugangsnetz 101 eines solchen Mobilfunkkommunikationsnetzes weist in der Regel eine Mehrzahl an Funkzellen auf, von denen in Figur 1 der Einfachheit halber lediglich eine Funkzelle, bezeichnet mit einem größeren Oval und dem Bezugszeichen 10, dargestellt ist. Typischerweise weist jede solche Funkzelle eine zugehörige Basisstationseinrichtung, die in Figur 1 (bezogen auf die Funkzelle 10) mit dem Bezugszeichen 111 schematisch dargestellt ist. In einer solchen Funkzelle 10 des als Mobilfunkkommunikationsnetz realisierten Telekommunikationsnetzes 100 können typischerweise eine Mehrzahl von Telekommunikationsgeräten bzw. Telekommunikationsendgeräten vorhanden bzw. lokalisiert sein. Hierzu sind in Figur 1, stellvertretend für eine möglicherweise größere Anzahl von Telekommunikationsgeräte, ein erstes Telekommunikationsgerät 20, ein zweites Telekommunikationsgerät 21 und ein drittes Telekommunikationsgerät 22 schematisch dargestellt. Die Telekommunikationsgeräte 20, 21, 22 können mit der Basisstationseinrichtung 111 in Funkkontakt stehen, wobei dies bedeutet, dass diese Telekommunikationsgeräte 20, 21, 22 mit der Basisstationseinrichtung 111 in Funkkontakt sind oder zumindest sein können oder zumindest zeitweise - typischerweise zeitlich in zumindest teilweise regelmäßiger Weise - in Funkkontakt (im Sinne der Übertragung von Informationen in Uplink-Richtung, d.h. vom jeweiligen Telekommunikationsgerät 20, 21, 22 zur Basisstationseinrichtung 111 hin und/oder in Downlink-Richtung, d.h. von der Basisstationseinrichtung 111 zum jeweiligen Telekommunikationsgerät 20, 21, 22 hin) stehen. Im Rahmen der Beschreibung der vorliegenden Erfindung wird lediglich auf das erste Telekommunikationsgerät 20 Bezug genommen und somit im Folgenden als (das) Telekommunikationsgerät 20 bezeichnet. Bei der Darstellung des Telekommunikationsnetzes 100 gemäß der Figur 1 wurde auch die Möglichkeit mitgedacht, dass es sich bei dem Telekommunikationsnetz 100 (alternativ zur Realisierung als Mobilfunkkommunikationsnetz) um ein Festnetz-Telekommunikationsnetz handelt; so ist das Telekommunikationsgerät 20 beispielsweise ebenfalls mittels einer durchgezogenen Linie mit dem Inhalteauslieferungsnetzwerk 120 verbunden, um anzudeuten, dass das Telekommunikationsgerät 20 im Wesentlichen bzw. hauptsächlich drahtgebunden an das Inhalteauslieferungsnetzwerk 120 bzw. das Kernnetz 102 angebunden ist bzw. in einer alternativen Ausführungsform angebunden sein kann.

Das Telekommunikationsnetz 100 weist gemäß der in Figur 1 dargestellten Realisierung - insbesondere als Teil des Kernnetzes 102 - ein Inhalteauslieferungsnetzwerk 120 (auch als Content Delivery Network bezeichnet) und eine inhaltebezogene Hintergrund-Servereinrichtung 150 auf. Eine solche Ausführung (des Inhalteauslieferungsnetzwerks 120 und der inhaltebezogenen Hintergrund-Servereinrichtung 150 als Teil des Telekommunikationsnetzes 100 bzw. des Kernnetzes 102 des Telekommunikationsnetzes 100) ist jedoch nicht zwingend: So kann das Inhalteauslieferungsnetzwerk 120 und/oder die inhaltebezogene Hintergrund-Servereinrichtung 150 auch außerhalb des Telekommunikationsnetzes 100 angeordnet, jedoch mit dem Telekommunikationsnetz 100 verbunden, vorgesehen sein.

Erfindungsgemäß ist es vorgesehen, dass Videoinformation 200 an das Telekommunikationsgerät 20 mittels des Telekommunikationsnetzes 100 übertragen wird. Das Telekommunikationsgerät 20 weist eine Anzeigeeinrichtung 25 auf oder die Anzeigeeinrichtung 25 ist dem Telekommunikationsgerät 20 zugeordnet.

Die Videoinformation 200 umfasst erfindungsgemäß eine Mehrzahl an Videoinformationsströmen, insbesondere jedoch einen ersten Videoinformationsstrom 210 und einen zweiten Videoinformationsstrom 220 (vgl. Figur 2). Erfindungsgemäß ist das Telekommunikationsgerät 20 eingerichtet, um wahlweise einen spezifischen Videoinformationsstrom aus der Mehrzahl von Videoinformationsströmen zum Zweck der Anzeige mittels der Anzeigeeinrichtung 25 zu bestimmen oder auszuwählen.

Das Telekommunikationsnetz 100 und das Inhalteauslieferungsnetzwerk 120 sind erfindungsgemäß derart konfiguriert, dass der bestimmte bzw. ausgewählte Videoinformationsstrom (etwa der erste Videoinformationsstrom 210 oder der zweite Videoinformationsstrom 220 oder auch ein nicht eigens mit einem Bezugszeichen versehener dritter Videoinformationsstrom) aus der Mehrzahl von Videoinformationsströmen zum Telekommunikationsgerät 20 übertragen wird.

Die inhaltebezogene Hintergrund-Servereinrichtung 150 und das Telekommunikationsgerät 20 sind - insbesondere im Zusammenspiel mit einem Nachrichtengateway 160 - zur Übertragung wenigstens einer inhaltebezogenen Videostromsteuerungsnachricht (jedoch in der Regel bzw. in der Praxis einer Vielzahl von inhaltebezogenen Videostromsteuerungsnachrichten) von der inhaltebezogenen Hintergrund-Servereinrichtung 150 zum Telekommunikationsgerät 20 konfiguriert.

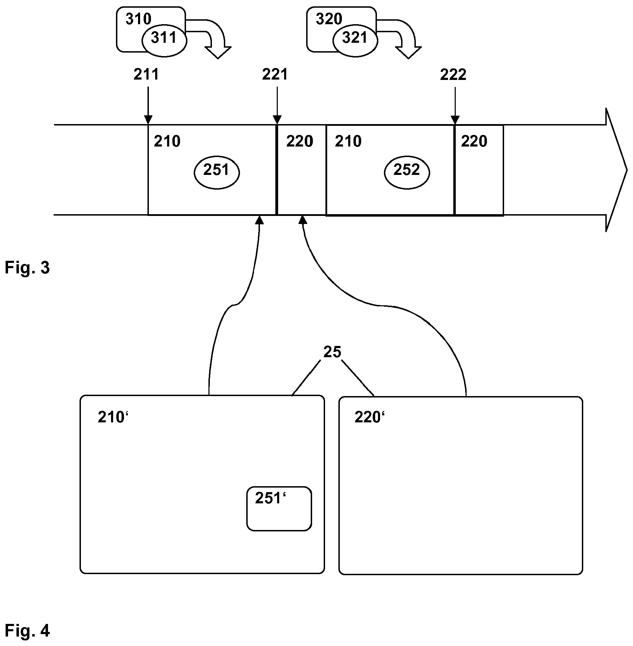

In Figur 2 ist beispielhaft und schematisch ein Kommunikationsdiagramm gemäß einer beispielhaften erfindungsgemäßen Situation dargestellt, während in Figur 3 der zeitliche Verlauf eines eines beispielhaften Resultats einer erfindungsgemäßen Situation auf der Anzeigeeinrichtung 25 schematisch wiedergegeben ist. Der zeitliche Verlauf ist in Figur 3 schematisch mittels eines nach rechts weisenden Pfeils dargestellt. Figur 4 zeigt schematisch die Darstellung der Anzeigeeinrichtung 25 für zwei Zeitpunkte des zeitlichen Verlaufs gemäß Figur 3, nämlich auf der linken Seite bzw. auf der rechten Seite der Figur 4 schematisch zwei Situationen der Anzeigeeinrichtung 25 (jedoch ohne konkreten Bildschirminhalt etwa einer Sportsituation).

Erfindungsgemäß ist es vorgesehen, dass in einem ersten Schritt der erste Videoinformationsstrom 210 mittels der Anzeigeeinrichtung 25 angezeigt wird, wobei hierzu ein entsprechender Datenstrom von dem Inhalteauslieferungsnetzwerk 120 an das Telekommunikationsgerät 20 übertragen wird.

In einem zweiten Schritt wird die Situation behandelt bzw. vorausgesetzt, dass sich ein relevantes Ereignis als Teil des zweiten Videoinformationsstrom 220 ereignet. Das relevante Ereignis führt zur Generierung einer ersten inhaltebezogenen Videostromsteuerungsnachricht 310 von der inhaltebezogenen Hintergrund-Servereinrichtung 150 zum Telekommunikationsgerät 20, wobei die erste inhaltebezogene Videostromsteuerungsnachricht 310 zum einen den zweiten Videoinformationsstrom 220 (d.h. den Videoinformationsstrom, in welchem das Ereignis stattfind bzw. stattfand) referenziert und zum anderen eine erste Zeitinformation 311 umfasst, wobei die erste Zeitinformation 311 einen auf den zweiten Videoinformationsstrom 220 bezogenen ersten Wiedergabezeitpunkt 221 des zweiten Videoinformationsstroms 220 referenziert.

In einem dem zweiten Schritt insbesondere nachfolgenden dritten Schritt wird der zweite Videoinformationsstrom 220, beginnend mit dem ersten Wiedergabezeitpunkt 221 des zweiten Videoinformationsstroms 220, mittels der Anzeigeeinrichtung 25 angezeigt, wobei hierzu ein entsprechender Datenstrom von dem Inhalteauslieferungsnetzwerk 120 an das Telekommunikationsgerät 20 übertragen wird.

Im zweiten Schritt wird erfindungsgemäß mittels der Anzeigeeinrichtung 25 eine erste Wiedergabeoptionsinformation 251 angezeigt, wobei der zweite Videoinformationsstrom 220 und der erste Wiedergabezeitpunkt 221 des zweiten Videoinformationsstroms 220 - insbesondere nach einer Auswahloperation mit Bezug zur Wiedergabeoptionsinformation 251 - aufgrund einer hierzu korrespondierenden ersten Videostromauswahlnachricht 201 zur Wiedergabe ausgewählt wird. Hierbei wird die erste Videostromauswahlnachricht 201 vom Telekommunikationsgerät 20 zum Telekommunikationsnetz 100 - insbesondere zum Inhalteauslieferungsnetzwerk 120 übertragen. Insbesondere weist die erste Videostromauswahlnachricht 201 auch die erste Zeitinformation 311 (d.h. referenzierend den auf den zweiten Videoinformationsstrom 220 bezogenen ersten Wiedergabezeitpunkt 221 des zweiten Videoinformationsstroms 220) auf bzw. jedenfalls den ersten Wiedergabezeitpunkt 221 des zweiten Videoinformationsstrom 220.

Die Situation, in der im (oder als Teil des) ersten Videoinformationsstroms 210 die Wiedergabeoptionsinformation 251 dargestellt wird, ist in der auf der linken Seite befindlichen Darstellung gemäß Figur 4 versinnbildlicht: Die Anzeigeeinrichtung 25 ist mit einem dem ersten Videoinformationsstrom 210 entsprechenden Bildschirminhalt 210' dargestellt, d.h. mit dem Bildschirminhalt 210', welcher einem bestimmten Zeitpunkt des in Figur 3 dargestellten zeitlichen Verlaufs entspricht. Dieser bestimmte Zeitpunkt ist mittels eines Pfeils, ausgehend von der linken Abbildung in Figur 4 zu einer bestimmten Stelle des zeitlichen Verlaufs gemäß Figur 3 angedeutet, nämlich ein Zeitpunkt, bevor vom ersten Videoinformationsstrom 210 zum zweiten Videoinformationsstrom 220 gewechselt wird. Als Teil des dem ersten Videoinformationsstrom 210 entsprechenden Bildschirminhalts 210' ist in der linken Abbildung in Figur 4 auch schematisch ein Bildschirmteilinhalt 251' (überlagert dem Bildschirminhalt 210', welcher dem ersten Videoinformationsstrom 210 entspricht) dargestellt, welcher der Wiedergabeoptionsinformation 251 entspricht. In der auf der rechten Seite befindlichen Darstellung gemäß Figur 4 ist ein Zeitpunkt nach der Umschaltung (oder dem Wechsel) vom ersten Videoinformationsstrom 210 zum zweiten Videoinformationsstrom 220 dargestellt: Die Anzeigeeinrichtung 25 ist mit einem dem zweiten Videoinformationsstrom 220 entsprechenden Bildschirminhalt 220' dargestellt, d.h. mit dem Bildschirminhalt 220', welcher einem bestimmten Zeitpunkt des in Figur 3 dargestellten zeitlichen Verlaufs entspricht. Dieser bestimmte Zeitpunkt ist wiederum mittels eines Pfeils, ausgehend von der rechten Abbildung in Figur 4 zu einer bestimmten Stelle des zeitlichen Verlaufs gemäß Figur 3 veranschaulicht, nämlich ein Zeitpunkt, nach dem vom ersten Videoinformationsstrom 210 zum zweiten Videoinformationsstrom 220 gewechselt wird.

Sowohl Figur 2 als auch Figur 3 zeigen ferner auch - als eine beispielhafte Situation -, dass in einem dem ersten Schritt nachfolgenden vierten Schritt wenigstens eine zweite inhaltebezogene Videostromsteuerungsnachricht 320 von der inhaltebezogenen Hintergrund-Servereinrichtung 150 zum Telekommunikationsgerät 20 übertragen wird, wobei die zweite inhaltebezogene Videostromsteuerungsnachricht 320 zum einen den zweiten Videoinformationsstrom 220 referenziert und zum anderen eine zweite Zeitinformation 321 umfasst, wobei die zweite Zeitinformation 321 einen auf den zweiten Videoinformationsstrom 220 bezogenen zweiten Wiedergabezeitpunkt 222 des zweiten Videoinformationsstroms 220 referenziert, wobei in einem, dem vierten Schritt nachfolgenden Schritt der zweite Videoinformationsstrom 220, beginnend mit dem zweiten Wiedergabezeitpunkt 222 des zweiten Videoinformationsstroms 220, mittels der Anzeigeeinrichtung 25 angezeigt wird, wobei hierzu ein entsprechender Datenstrom von dem Inhalteauslieferungsnetzwerk 120 an das Telekommunikationsgerät 20 übertragen wird.

Durch das erfindungsgemäße Verfahren zur Übertragung von Videoinformationen - im Kontext der vorliegenden Beschreibung auch als automatische Konferenz bezeichnet - ist es einem Benutzer oder einer Benutzerin des Telekommunikationsgeräts 20 (bzw. des Telekommunikationsgeräts 20 auf dem eine Anwendung in Form beispielsweise einer App installiert ist) möglich, über wichtige Ereignisse aus parallel laufenden Live-Events (etwa parallel verlaufende Sportereignisse eines Wettbewerbs) - mittels der ersten bzw. zweiten Wiedergabeoptionsinformation 251, 252, welche beispielsweise in die Darstellung auf der Anzeigeeinrichtung 25 eingeblendet wird - benachrichtigt zu werden und über Mitteilungen (bzw. die erste bzw. zweite Videostromauswahlnachrichten 201, 202) zu den Ereignissen in entsprechenden Live-Events wechseln (d.h. dass der zweite Videoinformationsstrom 220 angezeigt wird).

Insbesondere ist es erfindungsgemäß möglich, dass die automatische Konferenz (bzw. ein Konferenz-Alarm) direkt im Live-Spiel (d.h. direkt während der Wiedergabe des ersten Videoinformationsstrom 210) gestartet wird. Insbesondere ist das Spiel bzw. das Live-Event, in dem die automatische Konferenz gestartet wird (d.h. vorliegend der erste Videoinformationsstrom 210), das Hauptspiel bzw. bzw. der Haupt-Videoinformationsstrom und insbesondere gilt die automatische Konferenz für alle Spiele (bzw. Videoinformationsströme) des gleichen Wettbewerbs (d.h. für alle Videoinformationsstrom der Videoinformation). Für alle parallel laufenden Spiele (d.h. alle Videoinformationsströme der Videoinformation) kann ein Benutzer oder eine Benutzerin ab Start der automatischen Konferenz solche Benachrichtigungen (welche auch Bilder enthalten können) eingeblendet bekommen, etwa bezüglich gefallener Tore, Strafen oder dergleichen (d.h. die ersten bzw. zweiten Wiedergabeoptionsinformation 251, 252, welche ihrerseits durch die Übertragung der ersten bzw. zweiten inhaltebezogenen Videostromsteuerungsnachrichten 310, 320 getriggert werden). Insbesondere werden eine vorgegebene maximale Anzahl solcher Wiedergabeoptionsinformationen (insbesondere beispielsweise maximal drei) eingeblendet und für eine vorgegebene maximal Zeitdauer (insbesondere beispielsweise maximal für 10 Sekunden) angezeigt. Zeitlich zurückliegende Benachrichtigungen können über eine Option "alle Meldungen" eingeblendet werden, so dass dies auch später genutzt werden können. Durch das Auswählen einer Benachrichtigung wird in das jeweilige Spiel (d.h. in den jeweiligen Videoinformationsstrom) umgeschaltet, beispielsweise ca. 15 Sekunden vor das jeweils interessierende Ereignis, d.h. das Tor, die Strafe, etc. Es werden erfindungsgemäß insbesondere die Optionen bereitgestellt, wonach entweder wieder zurück zum Hauptevent (d.h. der erste Videoinformationsstrom) oder aber an den Live-Zeitpunkt des aktuellen Spiels gewechselt wird. In allen Fällen ist es möglich bzw. vorgesehen, dass weiterhin die Benachrichtigungen aus den Parallelspielen erhalten werden, d.h. auf der Anzeigeeinrichtung 25 angezeigt werden.

## Patentansprüche

1. Verfahren zur Übertragung von Videoinformation (200) [transmission of video information] an ein Telekommunikationsgerät (20) [telecommunication device] mittels eines Telekommunikationsnetzes (100) [telecommunication network], wobei das Telekommunikationsgerät (20) eine Anzeigeeinrichtung (25) [display device] umfasst oder wobei dem Telekommunikationsgerät (20) eine Anzeigeeinrichtung (25) zugeordnet ist,
wobei die Videoinformation (200) eine Mehrzahl an Videoinformationsströmen [plurality of video information streams] umfasst, wobei die Mehrzahl an Videoinformationsströmen wenigstens einen ersten Videoinformationsstrom (210) und einen zweiten Videoinformationsstrom (220) umfasst,
wobei das Telekommunikationsgerät (20) eingerichtet ist, um wahlweise einen spezifischen Videoinformationsstrom aus der Mehrzahl von Videoinformationsströmen zum Zweck der Anzeige mittels der Anzeigeeinrichtung (25) zu bestimmen oder auszuwählen,
wobei das Telekommunikationsnetz (100) ein Inhalteauslieferungsnetzwerk (120) [content delivery network, CDN] umfasst oder damit verbunden ist [comprises or is connected to], wobei das Telekommunikationsnetz (100) und das Inhalteauslieferungsnetzwerk (120) konfiguriert sind [are configured], den bestimmten oder ausgewählten Videoinformationsstrom aus der Mehrzahl von Videoinformationsströmen zum Telekommunikationsgerät (20) zu übertragen, wobei das Telekommunikationsnetz (100) ferner eine inhaltebezogene Hintergrund-Servereinrichtung (150) [content-related backend server entity] umfasst oder damit verbunden ist, wobei die inhaltebezogene Hintergrund-Servereinrichtung (150) und das Telekommunikationsgerät (20) zur Übertragung wenigstens einer inhaltebezogenen Videostromsteuerungsnachricht [content-related video stream control message] von der inhaltebezogenen Hintergrund-Servereinrichtung (150) zum Telekommunikationsgerät (20) konfiguriert sind,
wobei das Verfahren die nachfolgenden Schritte aufweist:
-- in einem ersten Schritt wird der erste Videoinformationsstrom (210) mittels der Anzeigeeinrichtung (25) angezeigt, wobei hierzu ein entsprechender Datenstrom von dem Inhalteauslieferungsnetzwerk (120) an das Telekommunikationsgerät (20) übertragen wird,
-- in einem dem ersten Schritt nachfolgenden zweiten Schritt, wird wenigstens eine erste inhaltebezogene Videostromsteuerungsnachricht (310) von der inhaltebezogenen Hintergrund-Servereinrichtung (150) zum Telekommunikationsgerät (20) übertragen, wobei die erste inhaltebezogene Videostromsteuerungsnachricht (310) zum einen den zweiten Videoinformationsstrom (220) referenziert und zum anderen eine erste Zeitinformation (311) umfasst, wobei die erste Zeitinformation (311) einen auf einen Videoinhalt des zweiten Videoinformationsstrom (220) bezogenen ersten Wiedergabezeitpunkt (221) des zweiten Videoinformationsstroms (220) referenziert, wobei der Wiedergabezeitpunkt (221) einen Zeitpunkt innerhalb des Videoinhalts festlegt, wobei der erste Wiedergabezeitpunkt (221) um einen vorgegebenen Zeitoffset vor einem im zweiten Videoinformationsstrom (220) identifizierten Ereignis liegt,
-- in einem dem zweiten Schritt nachfolgenden dritten Schritt wird der zweite Videoinformationsstrom (220), beginnend mit dem ersten Wiedergabezeitpunkt (221) des zweiten Videoinformationsstroms (220), mittels der Anzeigeeinrichtung (25) angezeigt, wobei hierzu ein entsprechender Datenstrom von dem Inhalteauslieferungsnetzwerk (120) an das Telekommunikationsgerät (20) übertragen wird,
wobei im zweiten Schritt mittels der Anzeigeeinrichtung (25) eine erste Wiedergabeoptionsinformation (251) [optional reproduction information] angezeigt wird, wobei der zweite Videoinformationsstrom (220) und der erste Wiedergabezeitpunkt (221) des zweiten Videoinformationsstroms (220) - nach einer Auswahloperation [selection operation] mit Bezug zur Wiedergabeoptionsinformation (251) - aufgrund einer zur ersten inhaltebezogenen Videostromsteuerungsnachricht (310) korrespondierenden ersten Videostromauswahlnachricht (201) zur Wiedergabe ausgewählt wird, wobei die erste Videostromauswahlnachricht (201) vom Telekommunikationsgerät (20) zum Inhalteauslieferungsnetzwerk (120) übertragen wird, wobei die erste Videostromauswahlnachricht (201) auch die erste Zeitinformation (311) aufweist,
wobei eine Umschaltung auf den zweiten Videoinformationsstrom zum ersten Wiedergabezeitpunkt des zweiten Videoinformationsstroms automatisch erfolgt.

2. Verfahren nach Anspruch 1, **dadurch gekennzeichnet, dass** wenigstens der erste Videoinformationsstrom (210) ein Livevideoinformationsstrom [live video information stream] ist, wobei insbesondere der zweite Videoinformationsstrom (220) entweder ebenfalls ein Livevideoinformationsstrom oder aber ein On-demand-Videoinformationsstrom [on-demand video information stream] ist.

3. Verfahren nach einem der vorhergehenden Ansprüche, **dadurch gekennzeichnet, dass** im ersten Schritt der erste Videoinformationsstrom (210) bis zu einem auf den ersten Videoinformationsstrom (210) bezogenen ersten Wiedergabezeitpunkt (211) des ersten Videoinformationsstroms (210) angezeigt wird, dass die im dritten Schritt erfolgende Wiedergabe des zweiten Videoinformationsstroms (220) für die Dauer eines ersten - insbesondere benutzerdefinierten und insbesondere vorgegebenen - Zeitintervalls, erfolgt, wobei nach dem ersten Zeitintervall die Wiedergabe des zweiten Videoinformationsstrom (220) beendet wird und der erste Videoinformationsstrom (210) mittels der Anzeigeeinrichtung (25) angezeigt wird, wobei der erste Videoinformationsstrom (210)
-- beginnend mit dem ersten Wiedergabezeitpunkt (211) des ersten Videoinformationsstroms (210), insbesondere mit originaler Wiedergabegeschwindigkeit, angezeigt wird,
oder
-- beginnend mit dem ersten Wiedergabezeitpunkt (211) des ersten Videoinformationsstroms (210) angezeigt wird, wobei die Wiedergabegeschwindigkeit gegenüber der originalen Wiedergabegeschwindigkeit erhöht ist, insbesondere bis zu einem Wiedergabezeitpunkt, bei dem das erste Zeitintervall durch die erhöhte Wiedergabegeschwindigkeit ausgeglichen oder aufgeholt ist,
oder
-- beginnend mit einem weiteren Wiedergabezeitpunkt (212) des ersten Videoinformationsstroms (210) angezeigt wird, wobei sich der weitere Wiedergabezeitpunkt (212) aus dem ersten Wiedergabezeitpunkt (211) des ersten Videoinformationsstroms (210) zuzüglich des ersten Zeitintervalls ergibt.

4. Verfahren nach einem der vorhergehenden Ansprüche, **dadurch gekennzeichnet, dass** die erste Zeitinformation (311) den ersten Wiedergabezeitpunkt (221) des zweiten Videoinformationsstroms (220) mittels einer Zeitstempelinformation [time stamp inforamtion] referenziert, die sich auf einen absoluten Zeitpunkt, insbesondere die koordinierte Weltzeit [Universal Coordinated Time, UTC], bezieht.

5. Verfahren nach einem der vorhergehenden Ansprüche, **dadurch gekennzeichnet, dass** in einem dem ersten Schritt nachfolgenden vierten Schritt wenigstens eine zweite inhaltebezogene Videostromsteuerungsnachricht (320) von der inhaltebezogenen Hintergrund-Servereinrichtung (150) zum Telekommunikationsgerät (20) übertragen wird, wobei die zweite inhaltebezogene Videostromsteuerungsnachricht (320) zum einen den zweiten Videoinformationsstrom (220) referenziert und zum anderen eine zweite Zeitinformation (321) umfasst, wobei die zweite Zeitinformation (321) einen auf den zweiten Videoinformationsstrom (220) bezogenen zweiten Wiedergabezeitpunkt (222) referenziert, wobei in einem, dem vierten Schritt nachfolgenden Schritt der zweite Videoinformationsstrom (220), beginnend mit dem zweiten Wiedergabezeitpunkt (222), mittels der Anzeigeeinrichtung (25) angezeigt wird, wobei hierzu ein entsprechender Datenstrom von dem Inhalteauslieferungsnetzwerk (120) an das Telekommunikationsgerät (20) übertragen wird.

6. Verfahren nach einem der vorhergehenden Ansprüche, **dadurch gekennzeichnet, dass** das Telekommunikationsnetz (100) ein Nachrichtengateway (160) [message gateway] umfasst oder damit verbunden ist, wobei das Telekommunikationsnetz (100) und das Nachrichtengateway (160) konfiguriert sind, die erste inhaltebezogene Videostromsteuerungsnachricht (310) zum Telekommunikationsgerät (20) zu übertragen oder diesem zur Verfügung zu stellen, wobei das Telekommunikationsgerät (20) konfiguriert ist, die erste inhaltebezogene Videostromsteuerungsnachricht (310) vom Nachrichtengateway (160) zu empfangen, wobei die erste inhaltebezogene Videostromsteuerungsnachricht (310) insbesondere
-- in einem ersten Teilschritt des zweiten Schritts von der inhaltebezogenen Hintergrund-Servereinrichtung (150) zu dem Nachrichtengateway (160) [message gateway] übertragen wird und
-- in einem zweiten Teilschritt des zweiten Schritts von dem Nachrichtengateway (160) zum Telekommunikationsgerät (20) übertragen wird,
wobei das Nachrichtengateway (160) insbesondere als
-- loT-Gateway oder als
-- REST-Gateway oder als
-- Push-Gateway
konfiguriert ist.

7. Verfahren nach einem der vorhergehenden Ansprüche, **dadurch gekennzeichnet, dass** der erste Videoinformationsstrom (210) ein Multicastinformationsstrom - insbesondere ein über IPTV (Internet Protocol Television) oder DVB-T (Digital Versatile Broadcast - Terrestric) oder DVB-Sat (Digital Versatile Broadcast - Satellite) übertragener Videoinformationsstrom - und der zweite Videoinformationsstrom (220) ein Unicastinformationsstrom und weitere Videoinformationsströme Unicastinformationsströme sind oder dass sowohl der erste als auch der zweite Videoinformationsstrom (210, 220) jeweils ein Unicastinformationsstrom ist.

8. System zur Übertragung von Videoinformation (200) an ein Telekommunikationsgerät (20) mittels eines Telekommunikationsnetzes (100),
wobei das Telekommunikationsgerät (20) eine Anzeigeeinrichtung (25) umfasst oder wobei dem Telekommunikationsgerät (20) eine Anzeigeeinrichtung (25) zugeordnet ist,
wobei die Videoinformation (200) eine Mehrzahl an Videoinformationsströmen umfasst, wobei die Mehrzahl an Videoinformationsströmen wenigstens einen ersten Videoinformationsstrom (210) und einen zweiten Videoinformationsstrom (220) umfasst,
wobei das Telekommunikationsgerät (20) eingerichtet ist, um wahlweise einen spezifischen Videoinformationsstrom aus der Mehrzahl von Videoinformationsströmen zum Zweck der Anzeige mittels der Anzeigeeinrichtung (25) zu bestimmen oder auszuwählen,
wobei das Telekommunikationsnetz (100) ein Inhalteauslieferungsnetzwerk (120) umfasst oder damit verbunden ist, wobei das Telekommunikationsnetz (100) und das Inhalteauslieferungsnetzwerk (120) konfiguriert sind, den bestimmten oder ausgewählten Videoinformationsstrom aus der Mehrzahl von Videoinformationsströmen zum Telekommunikationsgerät (20) zu übertragen,
wobei das Telekommunikationsnetz (100) ferner eine inhaltebezogene Hintergrund-Servereinrichtung (150) umfasst oder damit verbunden ist, wobei die inhaltebezogene Hintergrund-Servereinrichtung (150) und das Telekommunikationsgerät (20) zur Übertragung wenigstens einer inhaltebezogenen Videostromsteuerungsnachricht von der inhaltebezogenen Hintergrund-Servereinrichtung (150) zum Telekommunikationsgerät (20) konfiguriert sind,
wobei das System derart konfiguriert ist, dass:
-- der erste Videoinformationsstrom (210) mittels der Anzeigeeinrichtung (25) angezeigt wird, wobei hierzu ein entsprechender Datenstrom von dem Inhalteauslieferungsnetzwerk (120) an das Telekommunikationsgerät (20) übertragen wird,
-- wenigstens eine erste inhaltebezogene Videostromsteuerungsnachricht (310) von der inhaltebezogenen Hintergrund-Servereinrichtung (150) zum Telekommunikationsgerät (20) übertragen wird, wobei die erste inhaltebezogene Videostromsteuerungsnachricht (310) zum einen den zweiten Videoinformationsstrom (220) referenziert und zum anderen eine erste Zeitinformation (311) umfasst, wobei die erste Zeitinformation (311) einen auf einen Videoinhalt des zweiten Videoinformationsstrom (220) bezogenen ersten Wiedergabezeitpunkt (221) des zweiten Videoinformationsstroms (220) referenziert, wobei der Wiedergabezeitpunkt (221) einen Zeitpunkt innerhalb des Videoinhalts festlegt, wobei der erste Wiedergabezeitpunkt (221) um einen vorgegebenen Zeitoffset vor einem im zweiten Videoinformationsstrom (220) identifizierten Ereignis liegt, wobei das System derart konfiguriert ist, dass mittels der Anzeigeeinrichtung (25) eine erste Wiedergabeoptionsinformation (251) [optional reproduction information] angezeigt wird, wobei der zweite Videoinformationsstrom (220) und der erste Wiedergabezeitpunkt (221) des zweiten Videoinformationsstroms (220) - nach einer Auswahloperation [selection operation] mit Bezug zur Wiedergabeoptionsinformation (251) - aufgrund einer zur ersten inhaltebezogenen Videostromsteuerungsnachricht (310) korrespondierenden ersten Videostromauswahlnachricht (201) zur Wiedergabe ausgewählt wird, wobei das System derart konfiguriert ist, dass die erste Videostromauswahlnachricht (201) vom Telekommunikationsgerät (20) zum Inhalteauslieferungsnetzwerk (120) übertragen wird, wobei die erste Videostromauswahlnachricht (201) auch die erste Zeitinformation (311) aufweist,
-- der zweite Videoinformationsstrom (220), beginnend mit dem ersten Wiedergabezeitpunkt (221) des zweiten Videoinformationsstroms (220), mittels der Anzeigeeinrichtung (25) angezeigt wird, wobei hierzu ein entsprechender Datenstrom von dem Inhalteauslieferungsnetzwerk (120) an das Telekommunikationsgerät (20) übertragen wird,
wobei eine Umschaltung auf den zweiten Videoinformationsstrom zum ersten Wiedergabezeitpunkt des zweiten Videoinformationsstroms automatisch erfolgt.

9. Telekommunikationsgerät (20) zum Empfang von Videoinformation (200) mittels eines Telekommunikationsnetzes (100), wobei das Telekommunikationsgerät (20) eine Anzeigeeinrichtung (25) umfasst oder wobei dem Telekommunikationsgerät (20) eine Anzeigeeinrichtung (25) zugeordnet ist,
wobei die Videoinformation (200) eine Mehrzahl an Videoinformationsströmen umfasst, wobei die Mehrzahl an Videoinformationsströmen wenigstens einen ersten Videoinformationsstrom (210) und einen zweiten Videoinformationsstrom (220) umfasst,
wobei das Telekommunikationsgerät (20) eingerichtet ist, um wahlweise einen spezifischen Videoinformationsstrom aus der Mehrzahl von Videoinformationsströmen zum Zweck der Anzeige mittels der Anzeigeeinrichtung (25) zu bestimmen oder auszuwählen,
wobei ein Inhalteauslieferungsnetzwerk (120) des Telekommunikationsnetzes (100) konfiguriert sind, den bestimmten oder ausgewählten Videoinformationsstrom aus der Mehrzahl von Videoinformationsströmen zum Telekommunikationsgerät (20) zu übertragen,
wobei das Telekommunikationsgerät (20) und eine inhaltebezogene Hintergrund-Servereinrichtung (150) des Telekommunikationsnetzes (100) konfiguriert sind zum Empfang wenigstens einer inhaltebezogenen Videostromsteuerungsnachricht von der inhaltebezogenen Hintergrund-Servereinrichtung (150),
wobei das Telekommunikationsgerät (20) derart konfiguriert ist, dass:
-- der erste Videoinformationsstrom (210) mittels der Anzeigeeinrichtung (25) angezeigt wird, wobei hierzu ein entsprechender Datenstrom von dem Telekommunikationsgerät (20) empfangen wird,
-- wenigstens eine erste inhaltebezogene Videostromsteuerungsnachricht (310) von der inhaltebezogenen Hintergrund-Servereinrichtung (150) vom Telekommunikationsgerät (20) empfangen wird, wobei die erste inhaltebezogene Videostromsteuerungsnachricht (310) zum einen den zweiten Videoinformationsstrom (220) referenziert und zum anderen eine erste Zeitinformation (311) umfasst, wobei die erste Zeitinformation (311) einen auf einen Videoinhalt des zweiten Videoinformationsstrom (220) bezogenen ersten Wiedergabezeitpunkt (221) des zweiten Videoinformationsstroms (220) referenziert, wobei der Wiedergabezeitpunkt (221) einen Zeitpunkt innerhalb des Videoinhalts festlegt, wobei der erste Wiedergabezeitpunkt (221) um einen vorgegebenen Zeitoffset vor einem im zweiten Videoinformationsstrom (220) identifizierten Ereignis liegt, wobei das Telekommunikationsgerät (20) derart konfiguriert ist, dass mittels der Anzeigeeinrichtung (25) eine erste Wiedergabeoptionsinformation (251) [optional reproduction information] angezeigt wird, wobei der zweite Videoinformationsstrom (220) und der erste Wiedergabezeitpunkt (221) des zweiten Videoinformationsstroms (220) - nach einer Auswahloperation [selection operation] mit Bezug zur Wiedergabeoptionsinformation (251) - aufgrund einer zur ersten inhaltebezogenen Videostromsteuerungsnachricht (310) korrespondierenden ersten Videostromauswahlnachricht (201) zur Wiedergabe ausgewählt wird, wobei das Telekommunikationsgerät (20) derart konfiguriert ist, dass die erste Videostromauswahlnachricht (201) vom Telekommunikationsgerät (20) zum Inhalteauslieferungsnetzwerk (120)übertragen wird, wobei die erste Videostromauswahlnachricht (201) auch die erste Zeitinformation (311) aufweist,
-- der zweite Videoinformationsstrom (220), beginnend mit dem ersten Wiedergabezeitpunkt (221) des zweiten Videoinformationsstroms (220), mittels der Anzeigeeinrichtung (25) angezeigt wird, wobei hierzu ein entsprechender Datenstrom von dem Inhalteauslieferungsnetzwerk (120) an vom Telekommunikationsgerät (20) empfangen wird,
wobei eine Umschaltung auf den zweiten Videoinformationsstrom zum ersten Wiedergabezeitpunkt des zweiten Videoinformationsstroms automatisch erfolgt.

10. Inhaltebezogene Hintergrund-Servereinrichtung (150) zur Übertragung von Videoinformation (200) an ein Telekommunikationsgerät (20) mittels eines Telekommunikationsnetzes (100), wobei das Telekommunikationsgerät (20) eine Anzeigeeinrichtung (25) umfasst oder wobei dem Telekommunikationsgerät (20) eine Anzeigeeinrichtung (25) zugeordnet ist,
wobei die Videoinformation (200) eine Mehrzahl an Videoinformationsströmen umfasst, wobei die Mehrzahl an Videoinformationsströmen wenigstens einen ersten Videoinformationsstrom (210) und einen zweiten Videoinformationsstrom (220) umfasst,
wobei die inhaltebezogene Hintergrund-Servereinrichtung (150) konfiguriert ist, um dem Telekommunikationsgerät (20) zu ermöglichen, wahlweise einen spezifischen Videoinformationsstrom aus der Mehrzahl von Videoinformationsströmen zum Zweck der Anzeige mittels der Anzeigeeinrichtung (25) zu bestimmen oder auszuwählen,
wobei das Telekommunikationsnetz (100) ein Inhalteauslieferungsnetzwerk (120) umfasst oder damit verbunden ist, wobei das Telekommunikationsnetz (100) und das Inhalteauslieferungsnetzwerk (120) konfiguriert sind, den bestimmten oder ausgewählten Videoinformationsstrom aus der Mehrzahl von Videoinformationsströmen zum Telekommunikationsgerät (20) zu übertragen,
wobei die inhaltebezogene Hintergrund-Servereinrichtung (150) Teil des Telekommunikationsnetzes (100) oder mit diesem verbunden ist, wobei die inhaltebezogene Hintergrund-Servereinrichtung (150) und das Telekommunikationsgerät (20) zur Übertragung wenigstens einer inhaltebezogenen Videostromsteuerungsnachricht von der inhaltebezogenen Hintergrund-Servereinrichtung (150) zum Telekommunikationsgerät (20) konfiguriert sind,
wobei die inhaltebezogene Hintergrund-Servereinrichtung (150) derart konfiguriert ist, dass:
-- der erste Videoinformationsstrom (210) mittels der Anzeigeeinrichtung (25) angezeigt wird, wobei hierzu ein entsprechender Datenstrom von dem Inhalteauslieferungsnetzwerk (120) an das Telekommunikationsgerät (20) übertragen wird,
-- wenigstens eine erste inhaltebezogene Videostromsteuerungsnachricht (310) von der inhaltebezogenen Hintergrund-Servereinrichtung (150) zum Telekommunikationsgerät (20) übertragen wird, wobei die erste inhaltebezogene Videostromsteuerungsnachricht (310) zum einen den zweiten Videoinformationsstrom (220) referenziert und zum anderen eine erste Zeitinformation (311) umfasst, wobei die erste Zeitinformation (311) einen auf einen Videoinhalt des zweiten Videoinformationsstrom (220) bezogenen ersten Wiedergabezeitpunkt (221) des zweiten Videoinformationsstroms (220) referenziert, wobei der Wiedergabezeitpunkt (221) einen Zeitpunkt innerhalb des Videoinhalts festlegt, wobei der erste Wiedergabezeitpunkt (221) um einen vorgegebenen Zeitoffset vor einem im zweiten Videoinformationsstrom (220) identifizierten Ereignis liegt, wobei die inhaltebezogene Hintergrund-Servereinrichtung (150) derart konfiguriert ist, dass mittels der Anzeigeeinrichtung (25) eine erste Wiedergabeoptionsinformation (251) [optional reproduction information] angezeigt wird, wobei der zweite Videoinformationsstrom (220) und der erste Wiedergabezeitpunkt (221) des zweiten Videoinformationsstroms (220) - nach einer Auswahloperation [selection operation] mit Bezug zur Wiedergabeoptionsinformation (251) - aufgrund einer zur ersten inhaltebezogenen Videostromsteuerungsnachricht (310) korrespondierenden ersten Videostromauswahlnachricht (201) zur Wiedergabe ausgewählt wird, wobei die inhaltebezogene Hintergrund-Servereinrichtung (150) derart konfiguriert ist, dass die erste Videostromauswahlnachricht (201) vom Telekommunikationsgerät (20) zum Inhalteauslieferungsnetzwerk (120) übertragen wird, wobei die erste Videostromauswahlnachricht (201) auch die erste Zeitinformation (311) aufweist,
-- der zweite Videoinformationsstrom (220), beginnend mit dem ersten Wiedergabezeitpunkt (221) des zweiten Videoinformationsstroms (220), mittels der Anzeigeeinrichtung (25) angezeigt wird, wobei hierzu ein entsprechender Datenstrom von dem Inhalteauslieferungsnetzwerk (120) an das Telekommunikationsgerät (20) übertragen wird,
wobei eine Umschaltung auf den zweiten Videoinformationsstrom zum ersten Wiedergabezeitpunkt des zweiten Videoinformationsstroms automatisch erfolgt.

11. Computerprogramm umfassend Befehle, mit deren Hilfe die Schritte eines Verfahrens nach einem der Ansprüche 1 bis 7 durchführbar sind, wenn das Computerprogramm auf einer programmierbaren Einrichtung, insbesondere auf dem Telekommunikationsgerät (20) und/oder der inhaltebezogenen Hintergrund-Servereinrichtung (150) ausgeführt wird.

12. Computerlesbares Medium, vorgesehen zur Speicherung eines Computerprogramms, oder Datenträgersignal, vorgesehen zur Übertragung eines Computerprogramms, wobei das computerlesbare Medium oder das Datenträgersignal das Computerprogramm nach Anspruch 11 speichert oder überträgt oder wobei das computerlesbare Medium oder das Datenträgersignal den auf dem Telekommunikationsgerät (20) auszuführenden Teil des Computerprogramms nach Anspruch 11 speichert oder überträgt.

## Claims

1. Method for the transmission of video information (200) to a telecommunication device (20) by means of a telecommunication network (100), wherein the telecommunication device (20) comprises a display device (25) or wherein a display device (25) is associated with the telecommunication device (20),
wherein the video information (200) comprises a plurality of video information streams, wherein the plurality of video information streams comprises at least a first video information stream (210) and a second video information stream (220),
wherein the telecommunication device (20) is configured to selectively determine or select a specific video information stream from the plurality of video information streams for the purpose of display by means of the display device (25),
wherein the telecommunication network (100) comprises a content delivery network (CDN) (120) or is connected thereto, wherein the telecommunication network (100) and the content delivery network (CDN) (120) are configured to transmit the determined or selected video information stream from the plurality of video information streams to the telecommunication device (20),
wherein the telecommunication network (100) further comprises a content-related backend server entity (150) or is connected thereto, wherein the content-related backend server entity (150) and the telecommunication device (20) are configured for the transmission of at least one content-related video stream control message from the content-related backend server entity (150) to the telecommunication device (20),
wherein the method comprises the following steps:
- in a first step, the first video information stream (210) is displayed by means of the display device (25), wherein for this purpose a corresponding data stream is transmitted from the content delivery network (CDN) (120) to the telecommunication device (20),
- in a second step following the first step, at least one first content-related video stream control message (310) is transmitted from the content-related backend server entity (150) to the telecommunication device (20), wherein the first content-related video stream control message (310) references, on the one hand, the second video information stream (220) and, on the other hand, comprises first time information (311), wherein the first time information (311) references a first playback time point (221) of the second video information stream (220) related to a video content of the second video information stream (220), wherein the playback time point (221) defines a point in time within the video content, wherein the first playback time point (221) precedes an event identified in the second video information stream (220) by a predetermined time offset,
- in a third step following the second step, the second video information stream (220), starting with the first playback time point (221) of the second video information stream (220), is displayed by means of the display device (25), wherein for this purpose a corresponding data stream is transmitted from the content delivery network (CDN) (120) to the telecommunication device (20),
wherein, in the second step, first optional reproduction information (251) is displayed by means of the display device (25), wherein the second video information stream (220) and the first playback time point (221) of the second video information stream (220) are selected for reproduction - following a selection operation with reference to the optional reproduction information (251) - on the basis of a first video stream selection message (201) corresponding to the first content-related video stream control message (310), wherein the first video stream selection message (201) is transmitted from the telecommunication device (20) to the content delivery network (CDN) (120), wherein the first video stream selection message (201) also comprises the first time information (311),
wherein a switching to the second video information stream at the first playback time point of the second video information stream is performed automatically.

2. Method according to claim 1, **characterized in that** at least the first video information stream (210) is a live video information stream, wherein in particular the second video information stream (220) is either likewise a live video information stream or an on-demand video information stream.

3. Method according to any one of the preceding claims, **characterized in that** in the first step the first video information stream (210) is displayed up to a first playback time point (211) of the first video information stream (210) related to the first video information stream (210), that the reproduction of the second video information stream (220) taking place in the third step takes place for the duration of a first - in particular user-defined and in particular predetermined - time interval, wherein after the first time interval the reproduction of the second video information stream (220) is terminated and the first video information stream (210) is displayed by means of the display device (25), wherein the first video information stream (210)
- is displayed starting with the first playback time point (211) of the first video information stream (210), in particular at the original playback speed,
or
- is displayed starting with the first playback time point (211) of the first video information stream (210), wherein the playback speed is increased relative to the original playback speed, in particular up to a playback time point at which the first time interval is compensated or caught up by the increased playback speed,
or
- is displayed starting with a further playback time point (212) of the first video information stream (210), wherein the further playback time point (212) results from the first playback time point (211) of the first video information stream (210) plus the first time interval.

4. Method according to any one of the preceding claims, **characterized in that** the first time information (311) references the first playback time point (221) of the second video information stream (220) by means of time stamp information relating to an absolute point in time, in particular Universal Coordinated Time (UTC).

5. Method according to any one of the preceding claims, **characterized in that** in a fourth step following the first step, at least one second content-related video stream control message (320) is transmitted from the content-related backend server entity (150) to the telecommunication device (20), wherein the second content-related video stream control message (320) references, on the one hand, the second video information stream (220) and, on the other hand, comprises second time information (321), wherein the second time information (321) references a second playback time point (222) related to the second video information stream (220), wherein, in a step following the fourth step, the second video information stream (220), starting with the second playback time point (222), is displayed by means of the display device (25), wherein for this purpose a corresponding data stream is transmitted from the content delivery network (CDN) (120) to the telecommunication device (20).

6. Method according to any one of the preceding claims, **characterized in that** the telecommunication network (100) comprises a message gateway (160) or is connected thereto, wherein the telecommunication network (100) and the message gateway (160) are configured to transmit the first content-related video stream control message (310) to the telecommunication device (20) or to make it available thereto, wherein the telecommunication device (20) is configured to receive the first content-related video stream control message (310) from the message gateway (160), wherein the first content-related video stream control message (310) is, in particular,
- transmitted, in a first sub-step of the second step, from the content-related backend server entity (150) to the message gateway (160), and
- transmitted, in a second sub-step of the second step, from the message gateway (160) to the telecommunication device (20),
wherein the message gateway (160) is configured, in particular, as
- an IoT gateway, or as
- a REST gateway, or as
- a push gateway.

7. Method according to any one of the preceding claims, **characterized in that** the first video information stream (210) is a multicast information stream - in particular a video information stream transmitted via IPTV (Internet Protocol Television) or DVB-T (Digital Video Broadcasting - Terrestrial) or DVB-Sat (Digital Video Broadcasting - Satellite) - and the second video information stream (220) is a unicast information stream and further video information streams are unicast information streams, or **in that** both the first and the second video information stream (210, 220) are each a unicast information stream.

8. System for the transmission of video information (200) to a telecommunication device (20) by means of a telecommunication network (100), wherein the telecommunication device (20) comprises a display device (25) or wherein a display device (25) is associated with the telecommunication device (20),
wherein the video information (200) comprises a plurality of video information streams,
wherein the plurality of video information streams comprises at least a first video information stream (210) and a second video information stream (220),
wherein the telecommunication device (20) is configured to selectively determine or select a specific video information stream from the plurality of video information streams for the purpose of display by means of the display device (25),
wherein the telecommunication network (100) comprises a content delivery network (CDN) (120) or is connected thereto, wherein the telecommunication network (100) and the content delivery network (CDN) (120) are configured to transmit the determined or selected video information stream from the plurality of video information streams to the telecommunication device (20),
wherein the telecommunication network (100) further comprises a content-related backend server entity (150) or is connected thereto, wherein the content-related backend server entity (150) and the telecommunication device (20) are configured for the transmission of at least one content-related video stream control message from the content-related backend server entity (150) to the telecommunication device (20),
wherein the system is configured such that:
- the first video information stream (210) is displayed by means of the display device (25), wherein for this purpose a corresponding data stream is transmitted from the content delivery network (CDN) (120) to the telecommunication device (20),
- at least one first content-related video stream control message (310) is transmitted from the content-related backend server entity (150) to the telecommunication device (20), wherein the first content-related video stream control message (310) references, on the one hand, the second video information stream (220) and, on the other hand, comprises first time information (311), wherein the first time information (311) references a first playback time point (221) of the second video information stream (220) related to a video content of the second video information stream (220), wherein the playback time point (221) defines a point in time within the video content, wherein the first playback time point (221) precedes an event identified in the second video information stream (220) by a predetermined time offset, wherein the system is configured such that first optional reproduction information (251) is displayed by means of the display device (25), wherein the second video information stream (220) and the first playback time point (221) of the second video information stream (220) are selected for reproduction - following a selection operation with reference to the optional reproduction information (251) - on the basis of a first video stream selection message (201) corresponding to the first content-related video stream control message (310), wherein the system is configured such that the first video stream selection message (201) is transmitted from the telecommunication device (20) to the content delivery network (CDN) (120), wherein the first video stream selection message (201) also comprises the first time information (311),
- the second video information stream (220), starting with the first playback time point (221) of the second video information stream (220), is displayed by means of the display device (25), wherein for this purpose a corresponding data stream is transmitted from the content delivery network (CDN) (120) to the telecommunication device (20),
wherein a switching to the second video information stream at the first playback time point of the second video information stream is performed automatically.

9. Telecommunication device (20) for receiving video information (200) by means of a telecommunication network (100), wherein the telecommunication device (20) comprises a display device (25) or wherein a display device (25) is associated with the telecommunication device (20),
wherein the video information (200) comprises a plurality of video information streams, wherein the plurality of video information streams comprises at least a first video information stream (210) and a second video information stream (220),
wherein the telecommunication device (20) is configured to selectively determine or select a specific video information stream from the plurality of video information streams for the purpose of display by means of the display device (25),
wherein a content delivery network (CDN) (120) of the telecommunication network (100) is configured to transmit the determined or selected video information stream from the plurality of video information streams to the telecommunication device (20),
wherein the telecommunication device (20) and a content-related backend server entity (150) of the telecommunication network (100) are configured for receiving at least one content-related video stream control message from the content-related backend server entity (150),
wherein the telecommunication device (20) is configured such that:
- the first video information stream (210) is displayed by means of the display device (25), wherein for this purpose a corresponding data stream is received by the telecommunication device (20),
- at least one first content-related video stream control message (310) is received by the telecommunication device (20) from the content-related backend server entity (150), wherein the first content-related video stream control message (310) references, on the one hand, the second video information stream (220) and, on the other hand, comprises first time information (311), wherein the first time information (311) references a first playback time point (221) of the second video information stream (220) related to a video content of the second video information stream (220), wherein the playback time point (221) defines a point in time within the video content, wherein the first playback time point (221) precedes an event identified in the second video information stream (220) by a predetermined time offset, wherein the telecommunication device (20) is configured such that first optional reproduction information (251) is displayed by means of the display device (25), wherein the second video information stream (220) and the first playback time point (221) of the second video information stream (220) are selected for reproduction - following a selection operation with reference to the optional reproduction information (251) - on the basis of a first video stream selection message (201) corresponding to the first content-related video stream control message (310), wherein the telecommunication device (20) is configured such that the first video stream selection message (201) is transmitted from the telecommunication device (20) to the content delivery network (CDN) (120), wherein the first video stream selection message (201) also comprises the first time information (311),
- the second video information stream (220), starting with the first playback time point (221) of the second video information stream (220), is displayed by means of the display device (25), wherein for this purpose a corresponding data stream is received from the content delivery network (CDN) (120) by the telecommunication device (20),
wherein a switching to the second video information stream at the first playback time point of the second video information stream is performed automatically.

10. Content-related backend server entity (150) for the transmission of video information (200) to a telecommunication device (20) by means of a telecommunication network (100), wherein the telecommunication device (20) comprises a display device (25) or wherein a display device (25) is associated with the telecommunication device (20),
wherein the video information (200) comprises a plurality of video information streams, wherein the plurality of video information streams comprises at least a first video information stream (210) and a second video information stream (220),
wherein the content-related backend server entity (150) is configured to enable the telecommunication device (20) to selectively determine or select a specific video information stream from the plurality of video information streams for the purpose of display by means of the display device (25),
wherein the telecommunication network (100) comprises a content delivery network (CDN) (120) or is connected thereto, wherein the telecommunication network (100) and the content delivery network (CDN) (120) are configured to transmit the determined or selected video information stream from the plurality of video information streams to the telecommunication device (20),
wherein the content-related backend server entity (150) is part of the telecommunication network (100) or is connected thereto, wherein the content-related backend server entity (150) and the telecommunication device (20) are configured for the transmission of at least one content-related video stream control message from the content-related backend server entity (150) to the telecommunication device (20),
wherein the content-related backend server entity (150) is configured such that:
- the first video information stream (210) is displayed by means of the display device (25), wherein for this purpose a corresponding data stream is transmitted from the content delivery network (CDN) (120) to the telecommunication device (20),
- at least one first content-related video stream control message (310) is transmitted from the content-related backend server entity (150) to the telecommunication device (20), wherein the first content-related video stream control message (310) references, on the one hand, the second video information stream (220) and, on the other hand, comprises first time information (311), wherein the first time information (311) references a first playback time point (221) of the second video information stream (220) related to a video content of the second video information stream (220), wherein the playback time point (221) defines a point in time within the video content, wherein the first playback time point (221) precedes an event identified in the second video information stream (220) by a predetermined time offset, wherein the content-related backend server entity (150) is configured such that first optional reproduction information (251) is displayed by means of the display device (25), wherein the second video information stream (220) and the first playback time point (221) of the second video information stream (220) are selected for reproduction - following a selection operation with reference to the optional reproduction information (251) - on the basis of a first video stream selection message (201) corresponding to the first content-related video stream control message (310), wherein the content-related backend server entity (150) is configured such that the first video stream selection message (201) is transmitted from the telecommunication device (20) to the content delivery network (CDN) (120), wherein the first video stream selection message (201) also comprises the first time information (311),
- the second video information stream (220), starting with the first playback time point (221) of the second video information stream (220), is displayed by means of the display device (25), wherein for this purpose a corresponding data stream is transmitted from the content delivery network (CDN) (120) to the telecommunication device (20),
wherein a switching to the second video information stream at the first playback time point of the second video information stream is performed automatically.

11. Computer program comprising instructions by means of which the steps of a method according to any one of claims 1 to 7 can be carried out when the computer program is executed on a programmable device, in particular on the telecommunication device (20) and/or the content-related backend server entity (150).

12. Computer-readable medium provided for storing a computer program, or data carrier signal provided for transmitting a computer program, wherein the computer-readable medium or the data carrier signal stores or transmits the computer program according to claim 11, or wherein the computer-readable medium or the data carrier signal stores or transmits the part of the computer program according to claim 11 to be executed on the telecommunication device (20).

## Revendications

1. Procédé de transmission d'information vidéo (200) vers un dispositif de télécommunication (20) au moyen d'un réseau de télécommunication (100), le dispositif de télécommunication (20) comprenant un dispositif d'affichage (25) ou un dispositif d'affichage (25) étant associé au dispositif de télécommunication (20),
l'information vidéo (200) comprenant une pluralité de flux d'information vidéo, la pluralité de flux d'information vidéo comprenant au moins un premier flux d'information vidéo (210) et un deuxième flux d'information vidéo (220),
le dispositif de télécommunication (20) étant configuré pour déterminer ou sélectionner de manière sélective un flux d'information vidéo spécifique parmi la pluralité de flux d'information vidéo, à des fins d'affichage au moyen du dispositif d'affichage (25),
le réseau de télécommunication (100) comprenant un réseau de distribution de contenu (CDN) (120) ou étant relié à celui-ci, le réseau de télécommunication (100) et le réseau de distribution de contenu (CDN) (120) étant configurés pour transmettre le flux d'information vidéo déterminé ou sélectionné parmi la pluralité de flux d'information vidéo au dispositif de télécommunication (20),
le réseau de télécommunication (100) comprenant en outre une entité de serveur d'arrière-plan liée au contenu (150) ou étant relié à celle-ci, l'entité de serveur d'arrière-plan liée au contenu (150) et le dispositif de télécommunication (20) étant configurés pour la transmission d'au moins un message de commande de flux vidéo lié au contenu depuis l'entité de serveur d'arrière-plan liée au contenu (150) vers le dispositif de télécommunication (20),
le procédé comprenant les étapes suivantes :
- dans une première étape, le premier flux d'information vidéo (210) est affiché au moyen du dispositif d'affichage (25), un flux de données correspondant étant transmis à cet effet depuis le réseau de distribution de contenu (CDN) (120) vers le dispositif de télécommunication (20),
- dans une deuxième étape suivant la première étape, au moins un premier message de commande de flux vidéo lié au contenu (310) est transmis depuis l'entité de serveur d'arrière-plan liée au contenu (150) vers le dispositif de télécommunication (20), le premier message de commande de flux vidéo lié au contenu (310) référençant, d'une part, le deuxième flux d'information vidéo (220) et comprenant, d'autre part, une première information temporelle (311), la première information temporelle (311) référençant un premier instant de lecture (221) du deuxième flux d'information vidéo (220) relatif à un contenu vidéo du deuxième flux d'information vidéo (220), l'instant de lecture (221) définissant un instant à l'intérieur du contenu vidéo, le premier instant de lecture (221) précédant d'un décalage temporel prédéterminé un événement identifié dans le deuxième flux d'information vidéo (220),
- dans une troisième étape suivant la deuxième étape, le deuxième flux d'information vidéo (220), à partir du premier instant de lecture (221) du deuxième flux d'information vidéo (220), est affiché au moyen du dispositif d'affichage (25), un flux de données correspondant étant transmis à cet effet depuis le réseau de distribution de contenu (CDN) (120) vers le dispositif de télécommunication (20),
dans lequel, dans la deuxième étape, une première information de reproduction optionnelle (251) est affichée au moyen du dispositif d'affichage (25), le deuxième flux d'information vidéo (220) et le premier instant de lecture (221) du deuxième flux d'information vidéo (220) étant sélectionnés pour la reproduction - après une opération de sélection relative à l'information de reproduction optionnelle (251) - sur la base d'un premier message de sélection de flux vidéo (201) correspondant au premier message de commande de flux vidéo lié au contenu (310), le premier message de sélection de flux vidéo (201) étant transmis depuis le dispositif de télécommunication (20) vers le réseau de distribution de contenu (CDN) (120), le premier message de sélection de flux vidéo (201) comprenant également la première information temporelle (311),
une commutation vers le deuxième flux d'information vidéo s'effectuant automatiquement au premier instant de lecture du deuxième flux d'information vidéo.

2. Procédé selon la revendication 1, **caractérisé en ce qu'**au moins le premier flux d'information vidéo (210) est un flux d'information vidéo en direct, le deuxième flux d'information vidéo (220) étant en particulier soit également un flux d'information vidéo en direct, soit un flux d'information vidéo à la demande.

3. Procédé selon l'une des revendications précédentes, **caractérisé en ce que**, dans la première étape, le premier flux d'information vidéo (210) est affiché jusqu'à un premier instant de lecture (211) du premier flux d'information vidéo (210) relatif au premier flux d'information vidéo (210), **en ce que** la reproduction du deuxième flux d'information vidéo (220) ayant lieu dans la troisième étape s'effectue pendant la durée d'un premier intervalle de temps - en particulier un intervalle de temps défini par l'utilisateur et en particulier prédéterminé -, la reproduction du deuxième flux d'information vidéo (220) étant terminée après le premier intervalle de temps et le premier flux d'information vidéo (210) étant affiché au moyen du dispositif d'affichage (25), le premier flux d'information vidéo (210)
- étant affiché à partir du premier instant de lecture (211) du premier flux d'information vidéo (210), en particulier à la vitesse de lecture d'origine,
ou
- étant affiché à partir du premier instant de lecture (211) du premier flux d'information vidéo (210), la vitesse de lecture étant augmentée par rapport à la vitesse de lecture d'origine, en particulier jusqu'à un instant de lecture auquel le premier intervalle de temps est compensé ou rattrapé par la vitesse de lecture augmentée,
ou
- étant affiché à partir d'un autre instant de lecture (212) du premier flux d'information vidéo (210), cet autre instant de lecture (212) résultant du premier instant de lecture (211) du premier flux d'information vidéo (210) augmenté du premier intervalle de temps.

4. Procédé selon l'une des revendications précédentes, **caractérisé en ce que** la première information temporelle (311) référence le premier instant de lecture (221) du deuxième flux d'information vidéo (220) au moyen d'une information d'horodatage se rapportant à un instant absolu, en particulier le temps universel coordonné (UTC).

5. Procédé selon l'une des revendications précédentes, **caractérisé en ce que**, dans une quatrième étape suivant la première étape, au moins un deuxième message de commande de flux vidéo lié au contenu (320) est transmis depuis l'entité de serveur d'arrière-plan liée au contenu (150) vers le dispositif de télécommunication (20), le deuxième message de commande de flux vidéo lié au contenu (320) référençant, d'une part, le deuxième flux d'information vidéo (220) et comprenant, d'autre part, une deuxième information temporelle (321), la deuxième information temporelle (321) référençant un deuxième instant de lecture (222) relatif au deuxième flux d'information vidéo (220), dans lequel, dans une étape suivant la quatrième étape, le deuxième flux d'information vidéo (220), à partir du deuxième instant de lecture (222), est affiché au moyen du dispositif d'affichage (25), un flux de données correspondant étant transmis à cet effet depuis le réseau de distribution de contenu (CDN) (120) vers le dispositif de télécommunication (20).

6. Procédé selon l'une des revendications précédentes, **caractérisé en ce que** le réseau de télécommunication (100) comprend une passerelle de messages (160) ou est relié à celle-ci, le réseau de télécommunication (100) et la passerelle de messages (160) étant configurés pour transmettre le premier message de commande de flux vidéo lié au contenu (310) au dispositif de télécommunication (20) ou pour le mettre à sa disposition, le dispositif de télécommunication (20) étant configuré pour recevoir le premier message de commande de flux vidéo lié au contenu (310) depuis la passerelle de messages (160), le premier message de commande de flux vidéo lié au contenu (310) étant en particulier
- transmis, dans une première sous-étape de la deuxième étape, depuis l'entité de serveur d'arrière-plan liée au contenu (150) vers la passerelle de messages (160), et
- transmis, dans une deuxième sous-étape de la deuxième étape, depuis la passerelle de messages (160) vers le dispositif de télécommunication (20),
la passerelle de messages (160) étant configurée, en particulier, comme
- une passerelle IoT, ou comme
- une passerelle REST, ou comme
- une passerelle push.

7. Procédé selon l'une des revendications précédentes, **caractérisé en ce que** le premier flux d'information vidéo (210) est un flux d'information multicast - en particulier un flux d'information vidéo transmis par IPTV (Internet Protocol Television) ou par DVB-T (Digital Video Broadcasting - Terrestrial) ou par DVB-Sat (Digital Video Broadcasting - Satellite) - et le deuxième flux d'information vidéo (220) est un flux d'information unicast et d'autres flux d'information vidéo sont des flux d'information unicast, ou **en ce que** le premier et le deuxième flux d'information vidéo (210, 220) sont chacun un flux d'information unicast.

8. Système de transmission d'information vidéo (200) vers un dispositif de télécommunication (20) au moyen d'un réseau de télécommunication (100), le dispositif de télécommunication (20) comprenant un dispositif d'affichage (25) ou un dispositif d'affichage (25) étant associé au dispositif de télécommunication (20),
l'information vidéo (200) comprenant une pluralité de flux d'information vidéo, la pluralité de flux d'information vidéo comprenant au moins un premier flux d'information vidéo (210) et un deuxième flux d'information vidéo (220),
le dispositif de télécommunication (20) étant configuré pour déterminer ou sélectionner de manière sélective un flux d'information vidéo spécifique parmi la pluralité de flux d'information vidéo, à des fins d'affichage au moyen du dispositif d'affichage (25),
le réseau de télécommunication (100) comprenant un réseau de distribution de contenu (CDN) (120) ou étant relié à celui-ci, le réseau de télécommunication (100) et le réseau de distribution de contenu (CDN) (120) étant configurés pour transmettre le flux d'information vidéo déterminé ou sélectionné parmi la pluralité de flux d'information vidéo au dispositif de télécommunication (20),
le réseau de télécommunication (100) comprenant en outre une entité de serveur d'arrière-plan liée au contenu (150) ou étant relié à celle-ci, l'entité de serveur d'arrière-plan liée au contenu (150) et le dispositif de télécommunication (20) étant configurés pour la transmission d'au moins un message de commande de flux vidéo lié au contenu depuis l'entité de serveur d'arrière-plan liée au contenu (150) vers le dispositif de télécommunication (20),
le système étant configuré de telle sorte que :
- le premier flux d'information vidéo (210) est affiché au moyen du dispositif d'affichage (25), un flux de données correspondant étant transmis à cet effet depuis le réseau de distribution de contenu (CDN) (120) vers le dispositif de télécommunication (20),
- au moins un premier message de commande de flux vidéo lié au contenu (310) est transmis depuis l'entité de serveur d'arrière-plan liée au contenu (150) vers le dispositif de télécommunication (20), le premier message de commande de flux vidéo lié au contenu (310) référençant, d'une part, le deuxième flux d'information vidéo (220) et comprenant, d'autre part, une première information temporelle (311), la première information temporelle (311) référençant un premier instant de lecture (221) du deuxième flux d'information vidéo (220) relatif à un contenu vidéo du deuxième flux d'information vidéo (220), l'instant de lecture (221) définissant un instant à l'intérieur du contenu vidéo, le premier instant de lecture (221) précédant d'un décalage temporel prédéterminé un événement identifié dans le deuxième flux d'information vidéo (220), le système étant configuré de telle sorte qu'une première information de reproduction optionnelle (251) est affichée au moyen du dispositif d'affichage (25), le deuxième flux d'information vidéo (220) et le premier instant de lecture (221) du deuxième flux d'information vidéo (220) étant sélectionnés pour la reproduction - après une opération de sélection relative à l'information de reproduction optionnelle (251) - sur la base d'un premier message de sélection de flux vidéo (201) correspondant au premier message de commande de flux vidéo lié au contenu (310), le système étant configuré de telle sorte que le premier message de sélection de flux vidéo (201) est transmis depuis le dispositif de télécommunication (20) vers le réseau de distribution de contenu (CDN) (120), le premier message de sélection de flux vidéo (201) comprenant également la première information temporelle (311),
- le deuxième flux d'information vidéo (220), à partir du premier instant de lecture (221) du deuxième flux d'information vidéo (220), est affiché au moyen du dispositif d'affichage (25), un flux de données correspondant étant transmis à cet effet depuis le réseau de distribution de contenu (CDN) (120) vers le dispositif de télécommunication (20),
une commutation vers le deuxième flux d'information vidéo s'effectuant automatiquement au premier instant de lecture du deuxième flux d'information vidéo.

9. Dispositif de télécommunication (20) destiné à recevoir une information vidéo (200) au moyen d'un réseau de télécommunication (100), le dispositif de télécommunication (20) comprenant un dispositif d'affichage (25) ou un dispositif d'affichage (25) étant associé au dispositif de télécommunication (20),
l'information vidéo (200) comprenant une pluralité de flux d'information vidéo, la pluralité de flux d'information vidéo comprenant au moins un premier flux d'information vidéo (210) et un deuxième flux d'information vidéo (220),
le dispositif de télécommunication (20) étant configuré pour déterminer ou sélectionner de manière sélective un flux d'information vidéo spécifique parmi la pluralité de flux d'information vidéo, à des fins d'affichage au moyen du dispositif d'affichage (25),
un réseau de distribution de contenu (CDN) (120) du réseau de télécommunication (100) étant configuré pour transmettre le flux d'information vidéo déterminé ou sélectionné parmi la pluralité de flux d'information vidéo au dispositif de télécommunication (20),
le dispositif de télécommunication (20) et une entité de serveur d'arrière-plan liée au contenu (150) du réseau de télécommunication (100) étant configurés pour recevoir au moins un message de commande de flux vidéo lié au contenu depuis l'entité de serveur d'arrière-plan liée au contenu (150),
le dispositif de télécommunication (20) étant configuré de telle sorte que :
- le premier flux d'information vidéo (210) est affiché au moyen du dispositif d'affichage (25), un flux de données correspondant étant reçu à cet effet par le dispositif de télécommunication (20),
- au moins un premier message de commande de flux vidéo lié au contenu (310) est reçu par le dispositif de télécommunication (20) depuis l'entité de serveur d'arrière-plan liée au contenu (150), le premier message de commande de flux vidéo lié au contenu (310) référençant, d'une part, le deuxième flux d'information vidéo (220) et comprenant, d'autre part, une première information temporelle (311), la première information temporelle (311) référençant un premier instant de lecture (221) du deuxième flux d'information vidéo (220) relatif à un contenu vidéo du deuxième flux d'information vidéo (220), l'instant de lecture (221) définissant un instant à l'intérieur du contenu vidéo, le premier instant de lecture (221) précédant d'un décalage temporel prédéterminé un événement identifié dans le deuxième flux d'information vidéo (220), le dispositif de télécommunication (20) étant configuré de telle sorte qu'une première information de reproduction optionnelle (251) est affichée au moyen du dispositif d'affichage (25), le deuxième flux d'information vidéo (220) et le premier instant de lecture (221) du deuxième flux d'information vidéo (220) étant sélectionnés pour la reproduction - après une opération de sélection relative à l'information de reproduction optionnelle (251) - sur la base d'un premier message de sélection de flux vidéo (201) correspondant au premier message de commande de flux vidéo lié au contenu (310), le dispositif de télécommunication (20) étant configuré de telle sorte que le premier message de sélection de flux vidéo (201) est transmis depuis le dispositif de télécommunication (20) vers le réseau de distribution de contenu (CDN) (120), le premier message de sélection de flux vidéo (201) comprenant également la première information temporelle (311),
- le deuxième flux d'information vidéo (220), à partir du premier instant de lecture (221) du deuxième flux d'information vidéo (220), est affiché au moyen du dispositif d'affichage (25), un flux de données correspondant étant reçu à cet effet depuis le réseau de distribution de contenu (CDN) (120) par le dispositif de télécommunication (20),
une commutation vers le deuxième flux d'information vidéo s'effectuant automatiquement au premier instant de lecture du deuxième flux d'information vidéo.

10. Entité de serveur d'arrière-plan liée au contenu (150) destinée à la transmission d'information vidéo (200) vers un dispositif de télécommunication (20) au moyen d'un réseau de télécommunication (100), le dispositif de télécommunication (20) comprenant un dispositif d'affichage (25) ou un dispositif d'affichage (25) étant associé au dispositif de télécommunication (20),
l'information vidéo (200) comprenant une pluralité de flux d'information vidéo, la pluralité de flux d'information vidéo comprenant au moins un premier flux d'information vidéo (210) et un deuxième flux d'information vidéo (220),
l'entité de serveur d'arrière-plan liée au contenu (150) étant configurée pour permettre au dispositif de télécommunication (20) de déterminer ou de sélectionner de manière sélective un flux d'information vidéo spécifique parmi la pluralité de flux d'information vidéo, à des fins d'affichage au moyen du dispositif d'affichage (25),
le réseau de télécommunication (100) comprenant un réseau de distribution de contenu (CDN) (120) ou étant relié à celui-ci, le réseau de télécommunication (100) et le réseau de distribution de contenu (CDN) (120) étant configurés pour transmettre le flux d'information vidéo déterminé ou sélectionné parmi la pluralité de flux d'information vidéo au dispositif de télécommunication (20),
l'entité de serveur d'arrière-plan liée au contenu (150) faisant partie du réseau de télécommunication (100) ou étant reliée à celui-ci, l'entité de serveur d'arrière-plan liée au contenu (150) et le dispositif de télécommunication (20) étant configurés pour la transmission d'au moins un message de commande de flux vidéo lié au contenu depuis l'entité de serveur d'arrière-plan liée au contenu (150) vers le dispositif de télécommunication (20),
l'entité de serveur d'arrière-plan liée au contenu (150) étant configurée de telle sorte que :
- le premier flux d'information vidéo (210) est affiché au moyen du dispositif d'affichage (25), un flux de données correspondant étant transmis à cet effet depuis le réseau de distribution de contenu (CDN) (120) vers le dispositif de télécommunication (20),
- au moins un premier message de commande de flux vidéo lié au contenu (310) est transmis depuis l'entité de serveur d'arrière-plan liée au contenu (150) vers le dispositif de télécommunication (20), le premier message de commande de flux vidéo lié au contenu (310) référençant, d'une part, le deuxième flux d'information vidéo (220) et comprenant, d'autre part, une première information temporelle (311), la première information temporelle (311) référençant un premier instant de lecture (221) du deuxième flux d'information vidéo (220) relatif à un contenu vidéo du deuxième flux d'information vidéo (220), l'instant de lecture (221) définissant un instant à l'intérieur du contenu vidéo, le premier instant de lecture (221) précédant d'un décalage temporel prédéterminé un événement identifié dans le deuxième flux d'information vidéo (220), l'entité de serveur d'arrière-plan liée au contenu (150) étant configurée de telle sorte qu'une première information de reproduction optionnelle (251) est affichée au moyen du dispositif d'affichage (25), le deuxième flux d'information vidéo (220) et le premier instant de lecture (221) du deuxième flux d'information vidéo (220) étant sélectionnés pour la reproduction - après une opération de sélection relative à l'information de reproduction optionnelle (251) - sur la base d'un premier message de sélection de flux vidéo (201) correspondant au premier message de commande de flux vidéo lié au contenu (310), l'entité de serveur d'arrière-plan liée au contenu (150) étant configurée de telle sorte que le premier message de sélection de flux vidéo (201) est transmis depuis le dispositif de télécommunication (20) vers le réseau de distribution de contenu (CDN) (120), le premier message de sélection de flux vidéo (201) comprenant également la première information temporelle (311),
- le deuxième flux d'information vidéo (220), à partir du premier instant de lecture (221) du deuxième flux d'information vidéo (220), est affiché au moyen du dispositif d'affichage (25), un flux de données correspondant étant transmis à cet effet depuis le réseau de distribution de contenu (CDN) (120) vers le dispositif de télécommunication (20),
une commutation vers le deuxième flux d'information vidéo s'effectuant automatiquement au premier instant de lecture du deuxième flux d'information vidéo.

11. Programme d'ordinateur comprenant des instructions permettant d'exécuter les étapes d'un procédé selon l'une des revendications 1 à 7, lorsque le programme d'ordinateur est exécuté sur un dispositif programmable, en particulier sur le dispositif de télécommunication (20) et/ou sur l'entité de serveur d'arrière-plan liée au contenu (150).

12. Support lisible par ordinateur, prévu pour le stockage d'un programme d'ordinateur, ou signal de support de données, prévu pour la transmission d'un programme d'ordinateur, le support lisible par ordinateur ou le signal de support de données stockant ou transmettant le programme d'ordinateur selon la revendication 11, ou le support lisible par ordinateur ou le signal de support de données stockant ou transmettant la partie du programme d'ordinateur selon la revendication 11 devant être exécutée sur le dispositif de télécommunication (20).
